# EUROPEAN PATENT APPLICATION

(11) **EP 4 420 954 A1**
(43) Date of publication of application: **28.08.2024**
(21) Application number: 24159292.2
(22) Date of filing: 23.02.2024
(51) Int. Cl.: B62B 9/10, B62B 9/24, B60N 2/75, A47C 7/54

(54) **ARMREST MOUNTING UNITS, HANDCARTS AND SEAT COMPONENTS**

(30) Priority: 24.02.2023 CN 202310175777
(71) Applicant: Wonderland Switzerland AG, 6312 Steinhausen (CH)
(72) Inventor: HU, Zhiqiang, Dongguan, Guangdong, 523648 (CN)
(74) Representative: Kretschmann, Dennis

(57) **Abstract**

The present application discloses an armrest mounting unit (300) and a handcart. The armrest mounting unit (300) includes: a fixed base (310); a connecting base (320); a first magnetic member (330) fixed on one of the fixed base (310) and the connecting base (320); and a locking mechanism (340) disposed on the other one of the fixed base (310) and the connecting base (320). When the locking mechanism (340) is in a locked state, the connecting base (320) is fixable on the fixed base (310) through the locking mechanism (340). When the locking mechanism (340) is in an unlocked state, the connecting base (320) is separable from the fixed base (310). The first magnetic member (330) forms a magnetic action with the locking mechanism (340), to assist positioning and separation of the fixed base (310) and the connecting base (320).

## Description

### TECHNICAL FIELD

The present application relates to the technical field of carries, and in particular, to an armrest mounting unit, a handcart, and a seat assembly.

### BACKGROUND

In most of the handcarts currently on the market, such as strollers or nursing carriers, an armrest body is detachably connected to a frame. However, during the process of mounting the armrest body, accurate positioning is required to lock the armrest body and the frame. In addition, during the process of removing the armrest body, a locked force between the armrest body and the frame also needs to be overcome, and after the armrest body is unlocked, the armrest cannot be released automatically, and thus additional force is required to remove the armrest body, resulting in that the use process is very inconvenient and the armrest body cannot be quickly mounted and removed.

### SUMMARY

According to various embodiments of the present application, an armrest mounting unit, a handcart, and a seat assembly is provided.

An armrest mounting unit includes: a fixed base; a connecting base; a first magnetic member fixed on one of the fixed base and the connecting base; and a locking mechanism disposed on the other one of the fixed base and the connecting base. When the locking mechanism is in a locked state, the connecting base is fixable on the fixed base through the locking mechanism. When the locking mechanism is in an unlocked state, the connecting base is separable from the fixed base. The first magnetic member forms a magnetic action with the locking mechanism, to assist positioning and separation of the fixed base and the connecting base.

In the above armrest mounting unit, under the action of the magnetic force (including attractive force and/or repulsive force) formed between the first magnetic member and the locking mechanism, the locking mechanism can be switched between the locked state where the fixed base is fixed onto the connecting base and the unlocked state where the fixed base is separated from the connecting base. When the fixed base and the connecting base are respectively mounted on, for example, the armrest body and the frame, the armrest body can be quickly mounted on and removed from the frame, which is convenient to use.

In an embodiment, the locking mechanism is disposed on the connecting base, and includes: an unlocking member operable to move between a first locked position and a first unlocked position; an engaging member disposed on the connecting base; and a second magnetic member movably disposed on the connecting base, and forms a magnetic action with the first magnetic member.

In an embodiment, the locking mechanism further includes a rotatable member rotatably disposed at the connecting base and having a first rotation position and a second rotation position. The second magnetic member is disposed on the rotatable member. The second magnetic member includes two ends serving as a first magnetic pole and a second magnetic pole respectively. When the rotatable member is in the first rotation position, the first magnetic pole and the first magnetic member face and attract each other. When the rotatable member is in the second rotation position, the second magnetic pole and the first magnetic member face and repel each other. When the unlocking member is in the first locked position, the unlocking member drives the rotatable member to rotate to the first rotation position. When the unlocking member is in the first unlocked position, the unlocking member drives the rotatable member to rotate to the second rotation position.

In an embodiment, the locking mechanism further includes a connecting shaft fixed to the connecting base. The rotatable member is sleeved on the connecting shaft and is rotable around the connecting shaft.

In an embodiment, the unlocking member is provided with a sawtooth part. The rotatable member is provided with a gear part engageable with the unlocking member. The unlocking member drives the rotatable member to rotate through a cooperation of the sawtooth part and the gear part.

In an embodiment, the unlocking member is movable between the first locked position and the first unlocked position. The unlocking member is provided with a sawtooth part. The sawtooth part is disposed in a moving direction of the unlocking member. The rotatable member is provided with a gear part engageable with the unlocking member. The gear part protrudes from a side surface of the rotatable member. The sawtooth part is engaged with the gear part.

In an embodiment, the second magnetic member is fixedly connected to the unlocking member. When the unlocking member is in the first locked position, the second magnetic member faces and forms a magnetic action with the first magnetic member. When the unlocking member is in the first unlocked position, the second magnetic member is staggered from the first magnetic member to remove the magnetic action.

In an embodiment, the second magnetic member is a permanent magnet; or the second magnetic member is made of a ferromagnetic material.

In an embodiment, the locking mechanism further includes a third magnetic member. The second magnetic member and the third magnetic member are spaced apart from each other, and are fixedly connected to the unlocking member. When the unlocking member is in the first locked position, the second magnetic member faces and attracts the first magnetic member. When the unlocking member is in the first unlocked position, the third magnetic member faces and repels the first magnetic member.

In an embodiment, the locking mechanism further includes a moving member. The second magnetic member and the third magnetic member are spaced apart on the moving member. The moving member is fixed to the unlocking member.

In an embodiment, the engaging member includes an abutting portion. The unlocking member includes a pushing part. During a movement of the unlocking member from the first locked position to the first unlocked position, the pushing part pushes against the abutting portion so that the engaging member is disengaged from the fixed base.

In an embodiment, the engaging member includes an engaging arm. The fixed base includes an engaging groove. When the unlocking member is in the first locked position, the engaging arm is engaged with the engaging groove. When the unlocking member is in the first unlocked position, the engaging arm is disengaged from the engaging groove.

In an embodiment, the engaging member includes an abutting portion. The unlocking member includes a pushing part. During a movement of the unlocking member from the first locked position to the first unlocked position, the pushing part pushes against the abutting portion so that the engaging member is elastically deformed to be disengaged from the fixed base.

In an embodiment, the engaging member includes an engaging arm. The abutting portion is disposed at the engaging arm. The fixed base includes an engaging groove. The pushing part includes a pushing inclined surface. During the movement of the unlocking member from the first locked position to the first unlocked position, the pushing inclined surface pushes against the abutting portion, so that the engaging arm is elastically deformed in a direction away from the engaging groove.

In an embodiment, the engaging member further includes a fixing part connected to the engaging arm. The fixing part is fixed to the connecting base.

In an embodiment, the unlocking member includes an operating part. The operating part is operable so that the unlocking member moves between the first locked position and the first unlocked position.

In an embodiment, the locking mechanism further includes an operating member. The unlocking member includes an operating part. The operating member is connected to or abuts against the operating part. The operating member is operable to drive the unlocking member to move between the first locked position and the first unlocked position through the operating part.

In an embodiment, the engaging member includes two engaging arms facing each other and a fixing part connected between the two engaging arms. The fixing part is fixed on the connecting base. The fixed base includes an annular engaging groove. The fixed base is located between the two engaging arms. Each of the two engaging arms is provided with an abutting portion. The unlocking member is provided with two pushing parts facing each other. When the unlocking member is in the first locked position, the two engaging arms are engaged with the engaging groove. During a movement of the unlocking member from the first locked position to the first unlocked position, the two pushing parts push against two abutting portions respectively so that the two engaging arms are elastically deformed in a direction away from each other to be disengaged from the engaging groove.

In an embodiment, the unlocking member further includes two operating parts respectively fixedly connected to the two pushing parts. The two operating parts are operable to drive the two pushing parts to move.

In an embodiment, the unlocking member further includes an operating part connected to the two pushing parts. The operating part is operable to drive the two pushing parts to move.

In an embodiment, the locking mechanism further includes a reset member disposed between the unlocking member and the connecting base. The reset member is adapted to bias the unlocking member to move toward the first locked position.

In an embodiment, the connecting base includes a first cover and a second cover. The first cover and the second cover enclose a receiving space. The engaging member, the second magnetic member, and at least part of the unlocking member is disposed in the receiving space.

In an embodiment, the fixed base includes a first coupling portion; the connecting base includes a second coupling portion. When the connecting base is engaged with and locked with the fixed base, the second coupling portion is sleeved outside the first coupling portion.

A handcart includes: a frame; an armrest body; and an armrest mounting unit as described on any one of the above embodiments. The fixed base is disposed on one of the frame and armrest body. The connecting base is disposed on the other one of the frame and armrest body. The armrest body is detachably mounted on the frame through the armrest mounting unit.

In an embodiment, two armrest mounting units are provided; and two ends of the armrest body are detachably connected to two sides of the frame through the two armrest mounting units respectively.

In an embodiment, the frame includes a seat assembly; the handcart further includes: a restraint belt disposed on the seat assembly and having a restraining position and a non-restraining position; a locking buckle assembly connected to the restraint belt and having a locked state and an unlocked state; and a positioning mechanism disposed between the restraint belt and the seat assembly. When the locking buckle assembly is in the locked state, the locking buckle assembly is connectable to the restraint belt to keep the restraint belt in the restraining position. When the locking buckle assembly is in an unlocked state, the positioning mechanism keeps the restraint belt in the non-restraining position.

In an embodiment, the positioning mechanism includes a fourth magnetic member disposed on the seat assembly and a fifth magnetic member disposed on the restraint belt. The fourth magnetic member and the fifth magnetic member are capable of attracting each other to keep the restraint belt in the non-restraining position.

In an embodiment, the positioning mechanism further includes a protective piece sleeved outside the restraint belt and a fourth magnetic member disposed on the seat assembly or a fifth magnetic member disposed on the protective piece. An end of the restraint belt is capable of extending out of the protective piece.

In an embodiment, the positioning mechanism includes a protective piece sleeved outside the restraint belt and a flexible resilient member disposed in the protective piece. The flexible resilient member always moves the restraint belt toward the non-restraining position.

In an embodiment, the flexible resilient member is made of a polyvinyl chloride material, or metal material.

In an embodiment, the seat assembly includes a seat part configured to carry an occupant. The seat part includes a first side facing away from the occupant and a second side facing the occupant. The seat part is provided with a through hole. The protective piece includes a first piece part and a second piece part that are connected to each other. A maximum width of the first piece part is greater than a hole diameter of the through hole. An end of the second piece part connected to the first piece part has a width less than or equal to the hole diameter of the through hole. The protective piece extends through the through hole. The first piece part is located on the first side of the seat part, and the second piece part is located on the second side of the seat part.

In an embodiment, the flexible resilient member extends from the first piece part to the second piece part.

In an embodiment, the flexible resilient member includes a first elastic part and a second elastic part connected to each other. The first elastic part is located in the first piece part, and the second elastic part is located in the second piece part. A maximum width of the first elastic part is greater than a maximum width of the second elastic part.

In an embodiment, the positioning mechanism further includes a fourth magnetic member disposed on the seat assembly and a fifth magnetic member disposed on the protective piece. The fourth magnetic member and the fifth magnetic member are capable of attracting each other to keep the restraint belt in the non-restraining position.

In an embodiment, the positioning mechanism further includes a fourth magnetic member disposed on the seat assembly. The flexible resilient member is made of a ferromagnetic material. The flexible resilient member always moves the restraint belt toward the non-restraining position. The fourth magnetic member and the flexible resilient member are capable of attracting each other to keep the restraint belt in the non-restraining position.

In an embodiment, the protective piece includes an opening. The flexible resilient member is removable from the protective piece through the opening. Or, a pocket is disposed on the protective piece, and the flexible resilient member is removably inserted into the pocket.

In an embodiment, the flexible resilient member is a fishbone spring.

In an embodiment, the fishbone spring is fixed in the protective piece by sewing.

In an embodiment, the protective piece is filled with a cushioning material. The flexible resilient member is located between the cushioning material and the restraint belt.

In an embodiment, the positioning mechanism includes a protective piece sleeved outside the restraint belt. The protective piece is made of a flexible rubber material.

In an embodiment, the restraint belt includes a crotch belt adapted to be disposed between two thighs of an occupant. The positioning mechanism is disposed between the crotch belt and the seat assembly.

A seat assembly includes: a seat part; a restraint belt disposed on the seat part and having a restraining position and a non-restraining position; a locking buckle assembly connected to the restraint belt and having a locked state and an unlocked state; and a positioning mechanism disposed between the restraint belt and the seat part. When the locking buckle assembly is in the locked state, the locking buckle assembly is connectable to the restraint belt to keep the restraint belt in the restraining position. When the locking buckle assembly is in the unlocked state, the positioning mechanism keeps the restraint belt in the non-restraining position.

In an embodiment, the positioning mechanism includes a fourth magnetic member disposed on the seat part and a fifth magnetic member disposed on the restraint belt. The fourth magnetic member and the fifth magnetic member are capable of attracting each other to keep the restraint belt in the non-restraining position.

In an embodiment, the positioning mechanism further includes: a protective piece sleeved outside the restraint belt; and a fourth magnetic member disposed on the seat part and a fifth magnetic member disposed on the protective piece. An end of the restraint belt is capable of extending out of the protective piece.

In an embodiment, the positioning mechanism includes a protective piece sleeved outside the restraint belt and a flexible resilient member disposed in the protective piece. The flexible resilient member always moves the restraint belt toward the non-restraining position.

In an embodiment, the flexible resilient member has a sheet-like structure made of a polyvinyl chloride material, or metal material.

In an embodiment, the seat part includes a first side facing away from an occupant and a second side facing the occupant. The seat part is provided with a through hole. The protective piece includes a first piece part and a second piece part that are connected to each other. A maximum width of the first piece part is greater than a hole diameter of the through hole. An end of the second piece part connected to the first piece part has a width less than or equal to the hole diameter of the through hole. The protective piece extends through the through hole. The first piece part is located on the first side of the seat part, and the second piece part is located on the second side of the seat part.

In an embodiment, the flexible resilient member extends from the first piece part to the second piece part.

In an embodiment, the flexible resilient member includes a first elastic part and a second elastic part connected to each other. The first elastic part is located in the first piece part, and the second elastic part is located in the second piece part. A maximum width of the first elastic part is greater than a maximum width of the second elastic part.

In an embodiment, the positioning mechanism further includes a fourth magnetic member disposed on the seat part and a fifth magnetic member disposed on the protective piece. The fourth magnetic member and the fifth magnetic member are capable of attracting each other to keep the restraint belt in the non-restraining position.

In an embodiment, the positioning mechanism further includes a fourth magnetic member disposed on the seat part. The flexible resilient member is made of a ferromagnetic material. The flexible resilient member always moves the restraint belt toward the non-restraining position. The fourth magnetic member and the flexible resilient member are capable of attracting each other to keep the restraint belt in the non-restraining position.

In an embodiment, the protective piece includes an opening; the flexible resilient member is removable from the protective piece through the opening. Or, a pocket is disposed on the protective piece, and the flexible resilient member is removably inserted into the pocket.

In an embodiment, the flexible resilient member is a fishbone spring.

In an embodiment, the fishbone spring is at least partially fixed in the protective piece by sewing.

In an embodiment, the protective piece is filled with a cushioning material.

In an embodiment, the positioning mechanism includes a protective piece sleeved outside the restraint belt. The protective piece is made of a flexible rubber material.

In an embodiment, the restraint belt includes a crotch belt. The positioning mechanism is disposed between the crotch belt and the seat part.

### BRIEF DESCRIPTION OF THE DRAWINGS

FIG. 1 is a perspective schematic view of a handcart according to a first embodiment of the present application.
FIG. 2 is an exploded view of FIG. 1.
FIG. 3 is a perspective schematic view of an armrest body and an armrest mounting unit shown in FIG. 2.
FIG. 4 is a partial exploded view of the armrest body and the armrest mounting unit shown in FIG. 3.
FIG. 5 is a perspective schematic view of an engaging member shown in FIG. 4.
FIG. 6 is a perspective schematic view of an unlocking member shown in FIG. 4.
FIG. 7 is a perspective schematic view of an armrest body and an armrest mounting unit shown in FIG. 1.
FIG. 8 is a cross-sectional view taken along a line A-A in FIG. 7, in which a locking mechanism is in a locked state, and an unlocking member includes two operating parts.
FIG. 9 is a cross-sectional view taken along a line B-B in FIG. 7, in which a locking mechanism is in a locked state, and an unlocking member includes two operating parts.
FIG. 10 is another cross-sectional view taken along the line A-A in FIG. 7, in which the locking mechanism is in an unlocked state, and the unlocking member includes two operating parts.
FIG. 11 is another cross-sectional view taken along the line B-B in FIG. 7, in which the locking mechanism is in the unlocked state, and the unlocking member includes two operating parts.
FIG. 12 is yet another cross-sectional view taken along the line A-A in FIG. 7, in which the locking mechanism is in the locked state, and the unlocking member includes one operating part.
FIG. 13 is yet another cross-sectional view taken along the line B-B in FIG. 7, in which the locking mechanism is in the unlocked state, and the unlocking member includes one operating part.
FIG. 14 is another further cross-sectional view taken along the line A-A, and shows the armrest body and the armrest mounting unit, in which the locking mechanism is in the locked state, the unlocking member includes one operating part and the locking mechanism includes an operating member.
FIG. 15 is another further cross-sectional view taken along the line A-A, and shows the armrest body and the armrest mounting unit, in which the locking mechanism is in the unlocked state, and the unlocking member includes one operating part and the locking mechanism includes the operating member.
FIG. 16 is a partial cross-sectional view of an armrest mounting unit of the handcart according to a second embodiment of the present application, in which a locking mechanism is in a locked state.
FIG. 17 is a perspective schematic view of the locking mechanism shown in FIG. 16 when being is in an unlocked state.
FIG. 18 is a partial cross-sectional view of an armrest mounting unit in a handcart according to a third embodiment of the present application, in which a locking mechanism is in a locked state.
FIG. 19 is a perspective schematic view of the locking mechanism shown in FIG. 18 when being in an unlocked state.
FIG. 20 is a partial schematic view of a seat assembly according to an embodiment of the present application, in which a locking buckle assembly is in a locked state and a restraint belt is in a restraining position.
FIG. 21 is another partial schematic view of the seat assembly shown in FIG. 20, in which the locking buckle assembly is in an unlocked state and the restraint belt is in a non-restraining position.
FIG. 22 is a perspective schematic view of a protective piece and a positioning mechanism according to yet another embodiment.
FIG. 23 is a perspective schematic view of the protective piece and a flexible resilient member shown in FIG. 22 with another shape.
FIG. 24 is a perspective schematic view of the protective piece and the flexible resilient member shown in FIG. 22 with yet another shape.
FIG. 25 is a perspective schematic view of the protective piece and the flexible resilient member shown in FIG. 22 with another further shape.
FIG. 26 is another perspective schematic view of the protective piece and the positioning mechanism shown in FIG. 22.
FIG. 27 is a perspective schematic view of a protective piece and a positioning mechanism of a handcart according to yet another embodiment, in which a flexible resilient member is a fishbone spring.
FIG. 28 is a perspective schematic view of part of the fishbone spring shown in FIG. 27, after moving out of the protective piece.
FIG. 29 is a perspective schematic view of a protective piece and a positioning mechanism according to another embodiment.
FIG. 30 is a perspective schematic view of a protective piece and a positioning mechanism according to yet another embodiment.

### Illustration For Reference Numerals:

100, Frame; 110, Seat Assembly; 111, Seat Post; 112, Seat Part; 1121, Seat Cloth; 1122, Seat Cushion; 1122a, Through Hole; 120, Handle Assembly; 130, Armrest Support Rod; 200, Armrest Body; 300, Armrest Mounting unit; 310, Fixed Base; 311, First Coupling Portion; 312, Engaging Groove; 313, Limiting Boss; 314, Mounting Cavity; 320, Connecting Base; 321, First Cover; 3211, Elastic Arm; 3212, Second Pushing Protrusion; 3213, Second Sleeved Post; 3214, Strip Hole; 322, Second Cover; 3221, Connecting Hole; 3222, Receiving Hole; 3223, Second Coupling Portion; 3224, Fixing Post; 323, Receiving Space; 330, First Magnetic member; 340, Locking Mechanism; 341, Engaging Member; 3411, Engaging Arm; 3412, Fixing Part; 3412a, Fixing Ring; 3413, Abutting Portion; 342, Unlocking Member; 3421, Pushing Part; 3421a, Pushing Inclined Surface; 3421b, Sawtooth Part; 3422, Connecting Part; 3423, Operating Part; 3424, Connecting Rod; 3424a, First Pushing Protrusion; 3424b, First Sleeved Post; 343, Second Magnetic Member; 3431, First Magnetic Pole; 3432, Second Magnetic Pole; 344, Rotatable Member; 345, Reset Member; 346, Connecting Shaft; 347, Third Magnetic Member; 348, Moving Member; 349, Gear Part; 350, Mounting Cover; 360, Operating Member; 361, Sliding Part; 362, Driving Part; 363, Operating Protrusion; 400, Restraint Belt; 500, Locking Buckle Assembly; 600, Positioning Mechanism; 610, Fourth Magnetic Member; 620, Fifth Magnetic Member; 630, Protective Piece; 631, First Piece Part; 632, Second Piece Part; 633, Opening; 634, Sleeve; 640, Flexible Resilient Member; 641, First Elastic Part; 642, Second Elastic Part; 700, Waist Belt.

### DETAILED DESCRIPTION OF THE EMBODIMENTS

In order to make the object, technical solutions, and advantages of the present application clearer, the present application will be further described in detail below in conjunction with the accompanying drawings and specific embodiments. It should be understood that the specific embodiments described herein are only used to illustrate the present application and do not limit the protection scope of the present application.

It should be noted that, when an element is referred to as being "fixed on" another element, it may be directly on the other element or there may also present an intermediate element. When an element is referred to as being "connected to" another element, it may be directly connected to the other element or there might present an intermediate element at the same time. The terms "vertical", "horizontal", "left", "right" and similar expressions used herein are only for the purpose of illustration, rather than presenting the only ways for implementation.

Unless otherwise defined, all technical and scientific terms used herein have the same meanings as those commonly understood by those skilled in the art of the present application. The terms used in the description of the present application herein are only for the purpose of describing specific embodiments and are not intended to limit the present application. The term "and/or" used herein includes any and all combinations of one or more associated listed items.

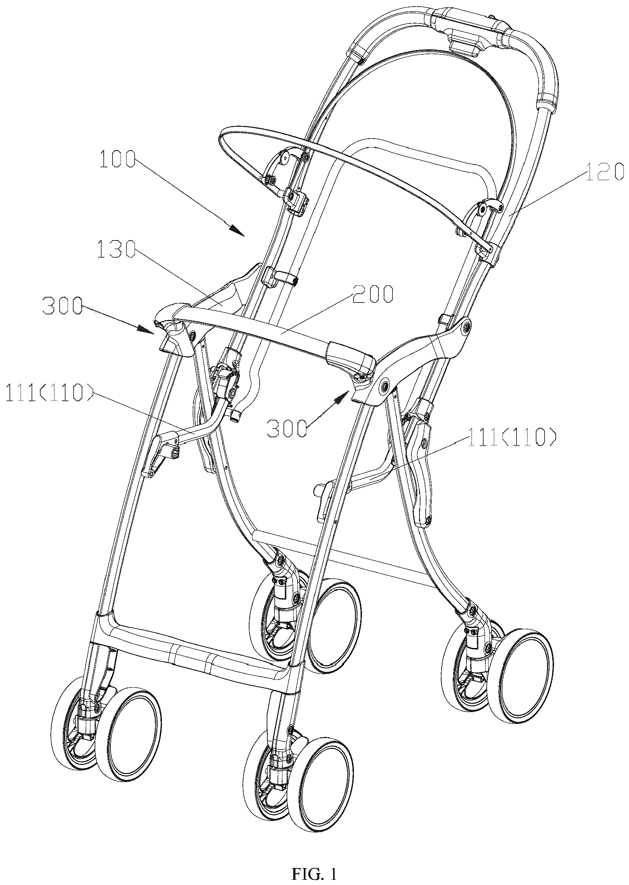

As shown in FIG. 1, an embodiment of the present application provides a handcart, such as a stroller or a nursing carrier, which includes a frame 100, an armrest body 200, and an armrest mounting unit 300. The armrest mounting unit 300, the armrest body 200, and the frame 100 can be quickly mounted and removed, and are easy to use.

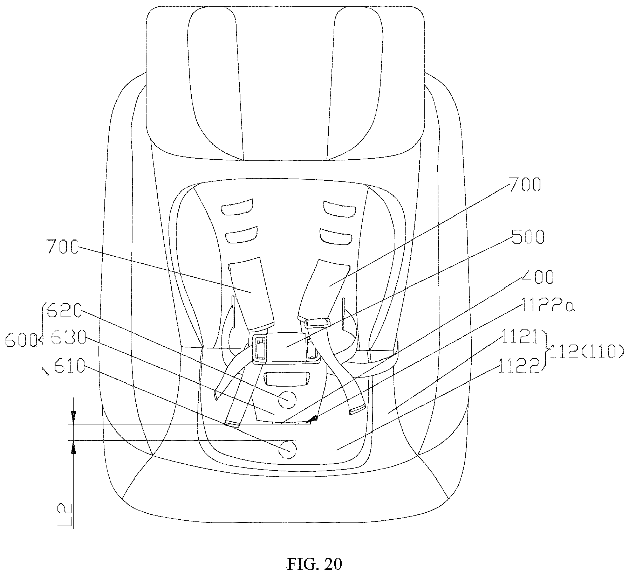

Specifically, as shown in FIG. 1, the frame 100 includes a seat assembly 110, a handle assembly 120, and an armrest support rod 130. The seat assembly 110 is used to carry an occupant, and includes two opposite seat posts 111 and a seat part 112 wrapped around the two seat posts 111 (see FIG. 20). The handle assembly 120 is connected to the seat assembly 110 to facilitate a caregiver to push the handcart to move. Two armrest support rods 130 are provided. First ends of the two armrest support rods 130 are respectively connected to both sides of the handle assembly 120. Correspondingly, two armrest mounting units 300 are provided. The armrest body 200 generally has a rod-shaped structure, and is used to restrict the occupant to the seat assembly 110. Both ends of the armrest body 200 are detachably mounted on second ends of the two armrest support rods 130 through the two armrest mounting units 300. Alternatively, an armrest mounting unit 300 can be disposed on only one side, and the armrest mounting unit 300 can be configured to be rotatably connected to the armrest support rod 130 on the other side.

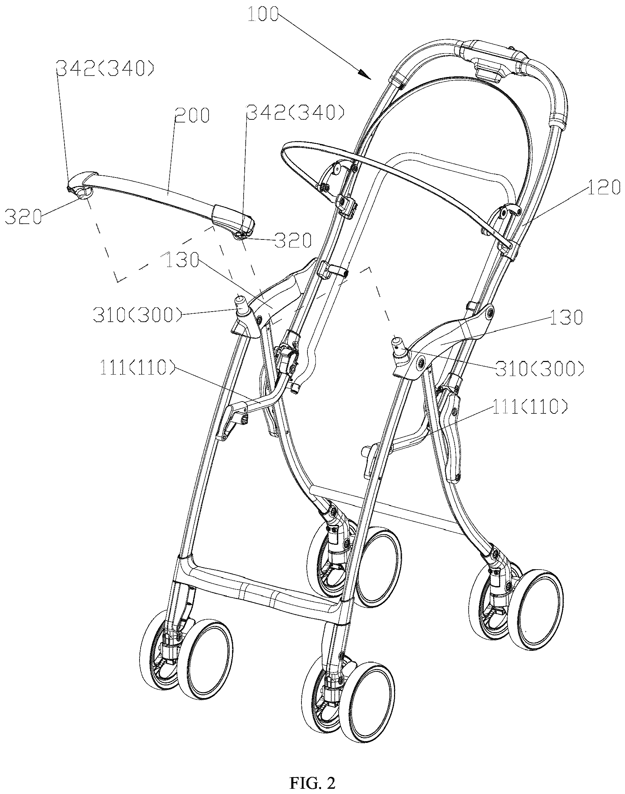

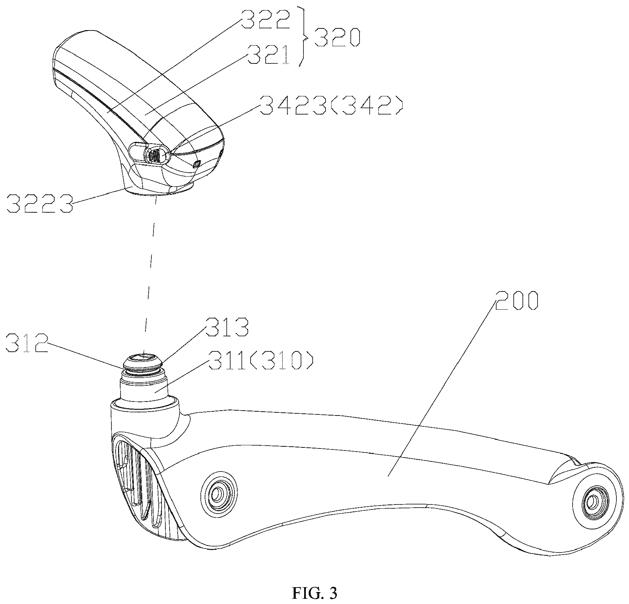

Specifically, as shown in FIGS. 2 to 4, the armrest mounting unit 300 includes a fixed base 310 that can be locked or unlocked, a connecting base 320, a first magnetic member 330, and a locking mechanism 340. In this embodiment, each of the seconds ends of the two armrest support rods 130 are provided with the fixed base 310, and each of the two ends of the armrest body 200 are provided with the connecting base 320. Both ends of the armrest body 200 are detachably connected to the two armrest support rods 130 respectively, through two connecting bases 320 and two fixed base 310 being locked or unlocked. In other embodiments, the fixed bases 310 can also be disposed at both ends of the armrest body 200, and the connecting bases 320 can be disposed at the second ends of the two armrest support rods 130.

Taking an armrest mounting unit 300 located at an end of the armrest body 200 as an example, the configuration and connection relationship of the armrest mounting unit 300 are introduced in detail below.

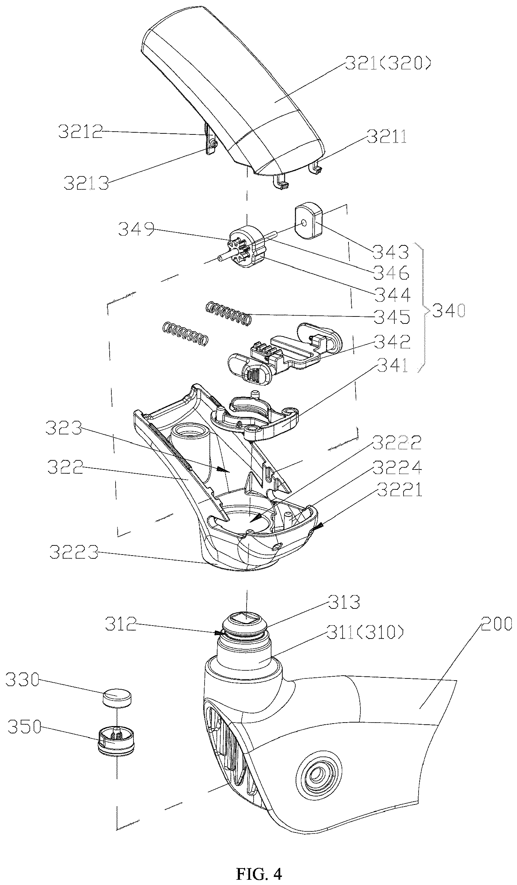

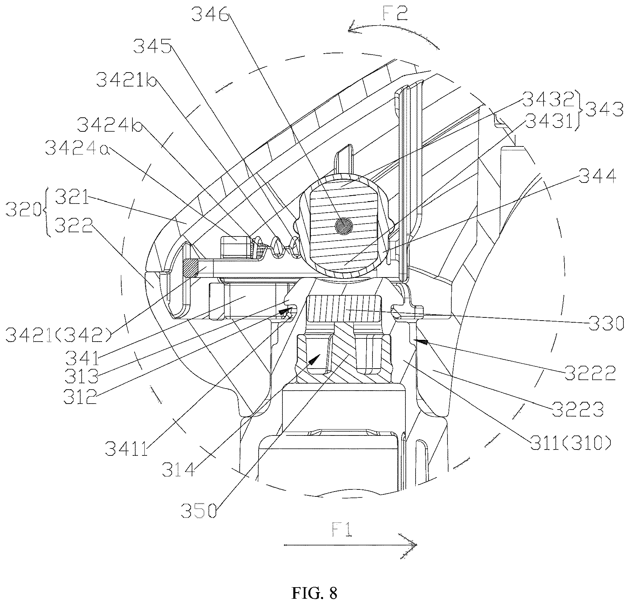

Specifically, as shown in FIG. 4, the fixed base 310 has a substantially columnar structure. Part of an outer wall of the fixed base 310 protrudes to form a cylindrical first coupling portion 311. The fixed base 310 is further provided with an annular engaging groove 312. In this embodiment, the engaging groove 312 is spaced apart from the first coupling portion 311 and is located on a side of the first coupling portion 311 away from the armrest support rod 130. That is, in FIG. 4, the engaging groove 312 is located above the first coupling portion 311. A groove wall of the engaging groove 312 away from the first coupling portion 311, that is, an upper groove wall of the engaging groove 312 forms a limiting boss 313. The first magnetic member 330 is a permanent magnet, and is disposed inside the fixed base 310. In this embodiment, the S pole of the first magnetic member 330 is farther away from the armrest support rod 130 than the N pole of the first magnetic member 330, that is, the first magnetic member 330 is arranged with the S pole facing upward. In other embodiments, the first magnetic member 330 can also be reversely arranged, that is, the N pole of the first magnetic member 330 is arranged to face upward. In this embodiment, as shown in FIG. 8, the fixed base 310 includes a mounting cavity 314. The first magnetic member 330 is inserted into the mounting cavity 314. A mounting cover 350 is pushed against the bottom of the first magnetic member 330, to prevent the first magnetic member 330 from falling off.

Specifically, as shown in FIG. 4, the connecting base 320 includes a first cover 321 and a second cover 322 that are engaged with each other. A receiving space 323 is formed between the first cover 321 and the second cover 322. Specifically, the first cover 321 may be provided with at least two elastic arms 3211, and the second cover 322 may be provided with at least two corresponding connecting holes 3221. The at least two elastic arms 3211 are engaged into the at least two connecting holes 3221, so that the first cover 321 is engaged with the second cover 322. Or, vice versa, for example, the connecting hole 3221 is disposed on the first cover 321, and the elastic arm 3211 that can be engaged into the connecting hole 3221 is disposed on the second cover 322, etc., and the present application is not limited thereto. In this embodiment, the first cover 321 is located on a side of the second cover 322 away from the armrest support rod 130, that is, the first cover 321 is located above the second cover 322. The second cover 322 includes a receiving hole 3222 that can be in communication with the receiving space 323. When the connecting base 320 is connected to the fixed base 310, the fixed base 310 is inserted into the receiving space 323 through the receiving hole 3222, so that a magnetic action is formed between the fixed base 310 and the locking mechanism 340. In addition, a hole wall of the receiving hole 3222 forms a second coupling portion 3223. When the connecting base 320 is connected to the fixed base 310, the second coupling portion 3223 is sleeved outside the first coupling portion 311 (see FIG. 8). In this embodiment, the connecting base 320 is connected to an end of the armrest body 200. In other embodiments, the connecting base 320 can also be integrally formed with the armrest body 200. In other embodiments, the first magnetic member 330 can also be disposed on the connecting base 320, and the locking mechanism 340 can be disposed on the fixed base 310.

Further, the locking mechanism 340 is at least partially disposed in the receiving space 323. A magnetic action can be formed between the first magnetic member 330 and the locking mechanism 340, to assist the positioning and separation of the fixed base 310 and the connecting base 320. When the locking mechanism 340 is in a locked state, the connecting base 320 can be fixed on the fixed base 310 through the locking mechanism 340. When the locking mechanism 340 is in an unlocked state, the connecting base 320 can be separated from the fixed base 310.

Optionally, the locking mechanism 340 may be in a variety of forms. For example, in a first embodiment, as shown in FIG. 4, the locking mechanism 340 may include an engaging member 341, an unlocking member 342, a second magnetic member 343, a rotatable member 344, and a reset member 345.

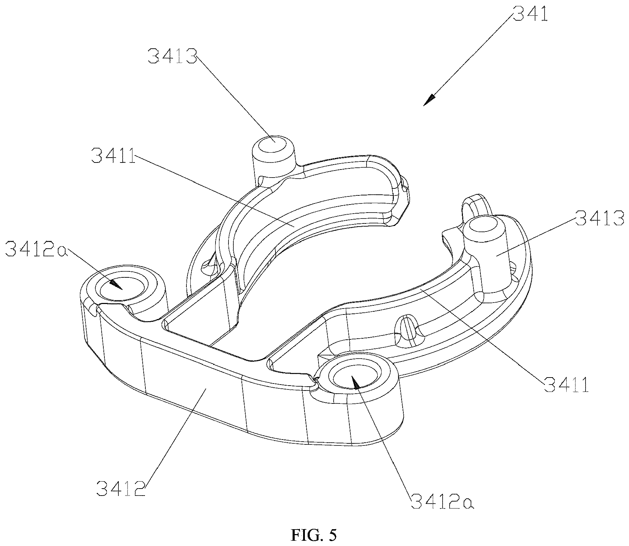

Specifically, as shown in FIG. 5, the engaging member 341 has a generally U-shaped structure, and includes two engaging arms 3411 facing each other and a fixing part 3412 connected between the two engaging arms 3411. The fixing part 3412 is fixed on the connecting base 320. Specifically, referring to FIG. 4, two fixing rings 3412a can be disposed at both ends of the fixing part 3412 respectively. Two fixing posts 3224 can be disposed on a side of the second cover 322 facing the receiving space 323. The two fixing rings 3412a can be respectively sleeved on the two fixing posts 3224 so that the fixing part 3412 is fixedly connected to the connecting base 320. The two engaging arms 3411 have a symmetrical arc-shaped sheet-like structure. An abutting portion 3413 is disposed on a surface of each of the engaging arms 3411 away from the second cover 322. In this embodiment, the abutting portion 3413 is disposed at a portion of the engaging arm 3411 away from the fixing part 3412, and the abutting portion 3413 has a substantially columnar structure. The two engaging arms 3411 are made of an elastically deformable material, such as polyvinyl chloride (PVC). When the two engaging arms 3411 is not elastically deformed, the two engaging arms 3411 can be engaged with two sides of the annular engaging groove 312. That is, the two engaging arms 3411 clamp the two sides of the fixed base 310. When the two engaging arms 3411 are elastically deformed, the two engaging arms 3411 can be deformed in directions away from each other, so as to be disengaged from the engaging grooves 312 respectively.

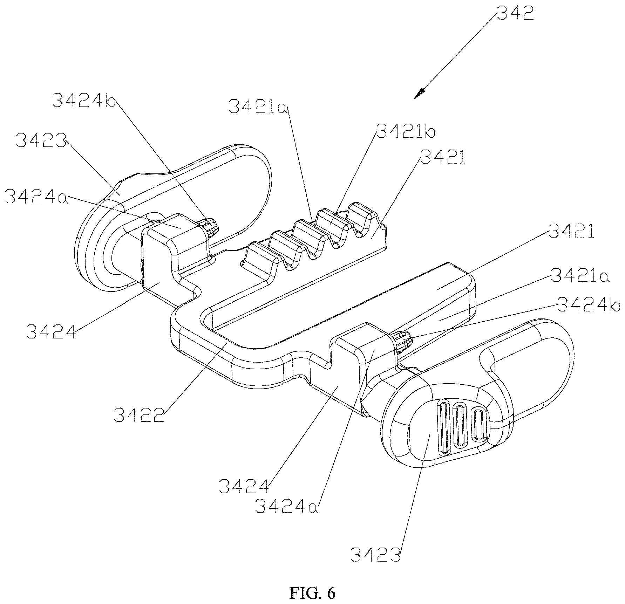

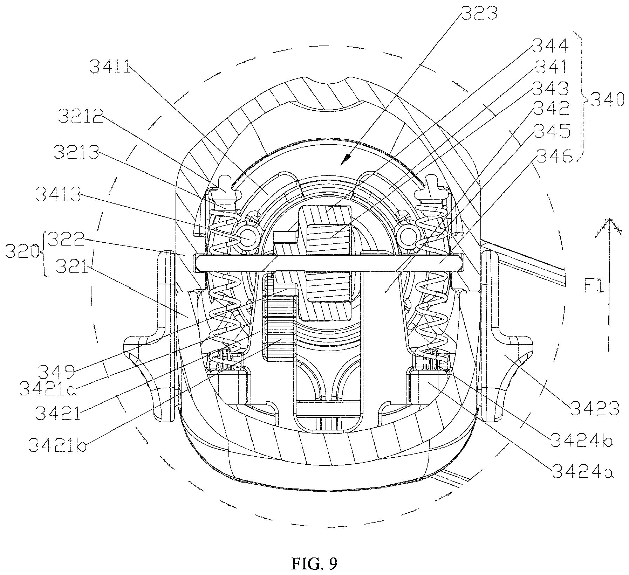

Further, as shown in FIGS. 6 and 9, the unlocking member 342 is movably disposed on the connecting base 320. At least part of the unlocking member 342 is located in the receiving space 323, and the other part of the unlocking member 342 is located outside the receiving space 323 for operation. The unlocking member 342 is operable to move between a first locked position and a first unlocked position. When the unlocking member 342 is in the first locked position, the locking mechanism 340 is in the locked state, and when the unlocking member 342 is in the first unlocked position, the locking mechanism 340 is in the unlocked state.

Specifically, as shown in FIG. 6, the unlocking member 342 may include a pushing part 3421, a connecting part 3422, and an operating part 3423.

As shown in FIG. 6, two pushing parts 3421 are provided. The two pushing parts 3421 are arranged opposite each other. The two pushing parts 3421 are connected through the connecting part 3422 to form a roughly U-shaped structure. Surfaces of the two pushing parts 3421 away from each other are both pushing inclined surfaces 3421a. Two pushing inclined surfaces 3421a gradually approach each other in a direction away from the connecting portion 3422. In this embodiment, one of the pushing parts 3421 is provided with a sawtooth part 3421b. In other embodiments, the sawtooth part 3421b may also be disposed on each of the two pushing parts 3421.

In this embodiment, as shown in FIG. 6, two operating parts 3423 are provided. The two operating parts 3423 are respectively fixed to sides of the two pushing parts 3421 away from each other through two connecting rods 3424. The two operating parts 3423 may be in the form of push buttons, for example, and extend out of the receiving space 323 for operation. The user can drive the unlocking member 342 to move between the first locked position and the first unlocked position by pushing the two operating parts 3423 at the same time.

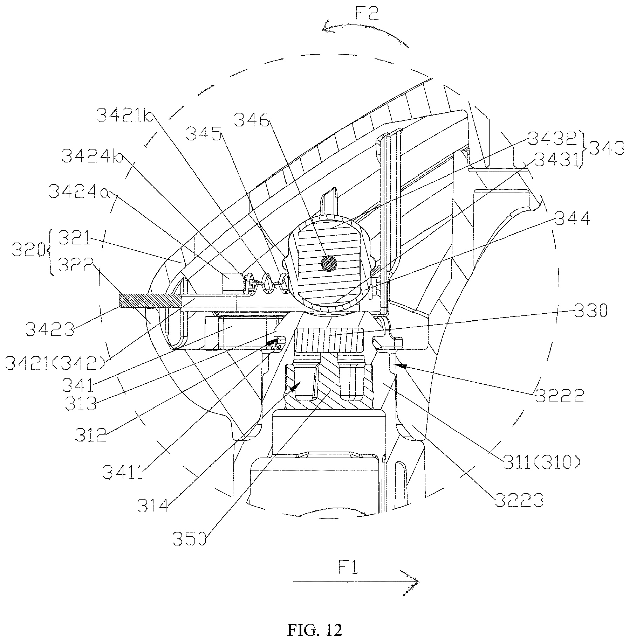

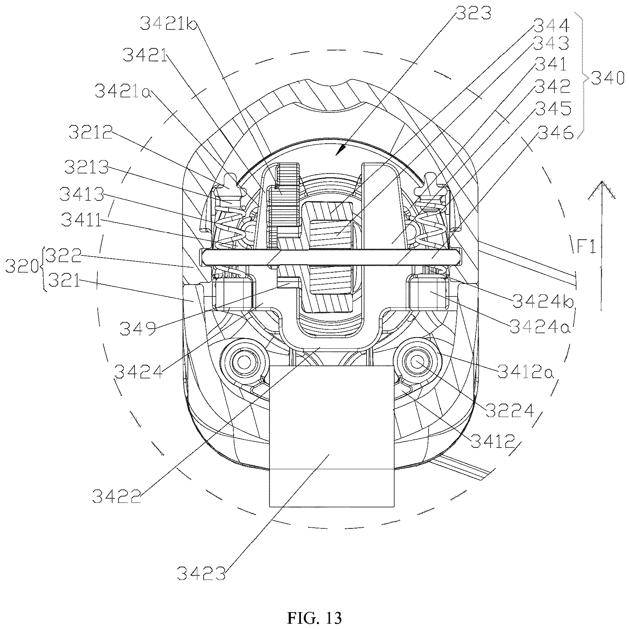

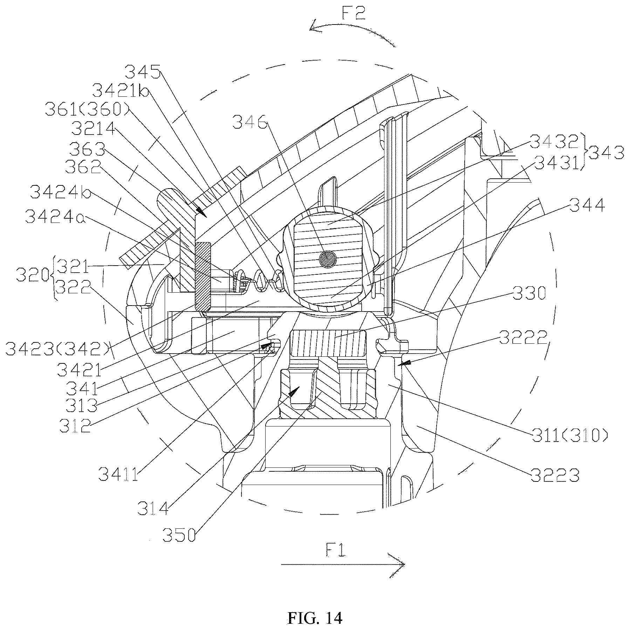

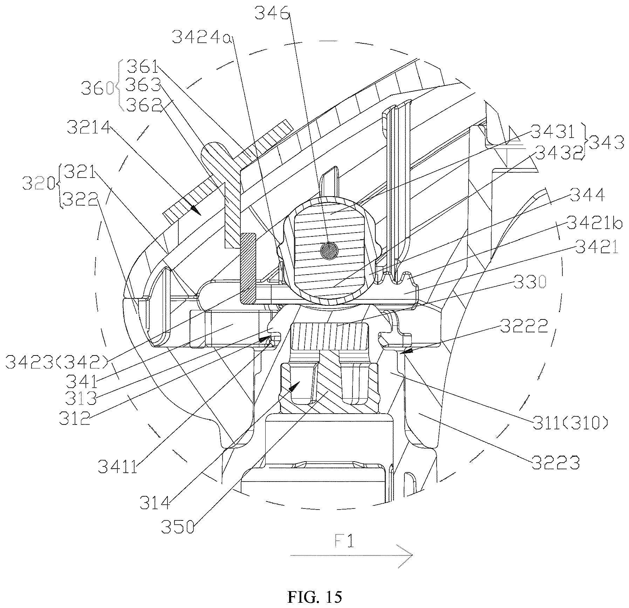

In other embodiments, as shown in FIGS. 12 and 13, one operating part 3423 may also be provided, and connected to the connecting part 3422. The operating part 3423 at least partially extends out of the receiving space 323 for operation. Alternatively, as shown in FIGS. 14 and 15, the operating part 3423 may also be located in the receiving space 323, and an operating member 360 at least partially extending out of the receiving space 323 may be additionally provided. The operating member 360 is connected to or abuts against the operating part 3423. The operating member 360 is operable to drive the unlocking member 342 to move between the first locked position and the first unlocked position through the operating part 3423. Specifically, the operating member 360 may include a sliding part 361 and a driving part 362 that are connected to each other and arranged at an angle to each other. The sliding part 361 is located outside the receiving space 323 and can slide along an outer surface of the first cover 321. The sliding part 361 is provided with an operating protrusion 363, which can facilitate the user to operate. The first cover 321 is provided with a strip hole 3214 in communication with the receiving space 323. An end of the driving part 362 away from the sliding part 361 is inserted into the receiving space 323 through the strip hole 3214, and abuts against or is connected to the operating part 3423. In this way, by pushing the operating protrusion 363, the unlocking member 342 can be driven to move between the first locked position and the first unlocked position. In this embodiment, when the operating part 3423 or the operating member 360 is pushed, the unlocking member 342 moves from the first locked position to the first unlocked position.

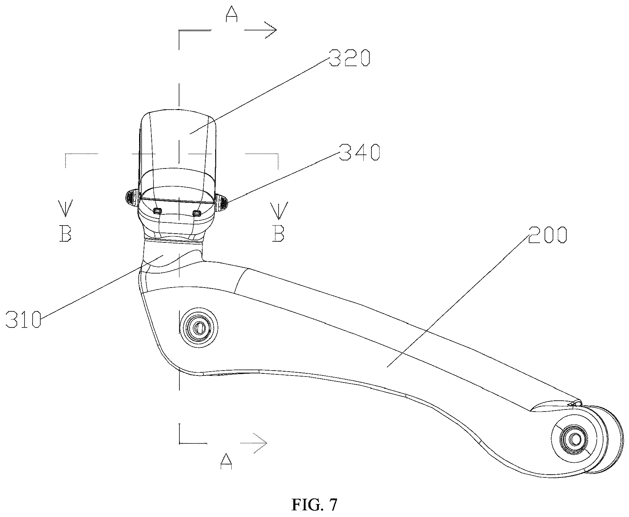

Further, as shown in FIGS. 7 to 9, the second magnetic member 343 is embedded in the rotatable member 344, and the rotatable member 344 is rotatably disposed in the receiving space 323. When the connecting base 320 is connected to the fixed base 310, the rotatable member 344 is located above the first magnetic member 330. In this embodiment, the second magnetic member 343 is a permanent magnet. Two ends of the second magnetic member 343 serve as a first magnetic pole 3431 and a second magnetic pole 3432 respectively. When the rotatable member 344 is in a first rotation position, the first magnetic pole 3431 and the first magnetic member 330 face and attract each other. When the rotatable member 344 is in a second rotation position, the second magnetic pole 3432 and the first magnetic member 330 face and repel each other. As mentioned above, in this embodiment, since the first magnetic member 330 is the S pole and faces upward, the first magnetic pole 3431 of the second magnetic member 343 is the N pole, and the second magnetic pole 3432 of the second magnetic member 343 is the S pole. In other embodiments, if the first magnetic member 330 is the N pole and faces upward, the first magnetic pole 3431 is the S pole, and the second magnetic pole 3432 is the N pole.

Specifically, as shown in FIGS. 8 and 9, a connecting shaft 346 may be disposed in the receiving space 323. Both ends of the connecting shaft 346 are respectively fixed to the first cover 321 or the second cover 322. The second magnetic member 343 has a roughly cylindrical structure, and the rotatable member 344 has a roughly cylindrical structure. The second magnetic member 343 and the substantially middle part of the rotatable member 344 are sleeved on the connecting shaft 346 and can rotate around the connecting shaft 346. The rotatable member 344 has an annular outer wall. The rotatable member 344 is provided with a gear part 349. The gear part 349 protrudes from a side surface of the rotatable member 344. The sawtooth part 3421b is engaged with the gear part 349. In this way, when the unlocking member 342 moves between the first locked position and the second locked position, the rotation member 344 can be driven to rotate between the first rotation position and the second rotation position through the cooperation of the sawtooth part 3421b and the gear part 349.

Further, the reset member 345 is disposed between the unlocking member 342 and the connecting base 320. The reset member 345 is adapted to bias the unlocking member 342 to move toward the first locked position. In this embodiment, the reset member 345 is a spring. Two reset members 345 may be provided. The two connecting rods 3424 may be respectively provided with first pushing protrusions 3424a. Each first pushing protrusion 3424a is provided with a first sleeved post 3424b. An inner wall of the first cover 321, that is, the surface of the first cover 321 facing the receiving space 323 is provided with two corresponding second pushing protrusions 3212. Each second pushing protrusion 3212 is provided with a second sleeved post 3213. Both ends of each reset member 345 are respectively sleeved on the corresponding first sleeved post 3424b and the second sleeved post 3213, and abut against the corresponding first pushing protrusion 3424a and the second pushing protrusion 3212, so that the reset member 345 can be prevented from being displaced during deformation.

The specific working principle of the locking mechanism 340 in this embodiment is as follows.

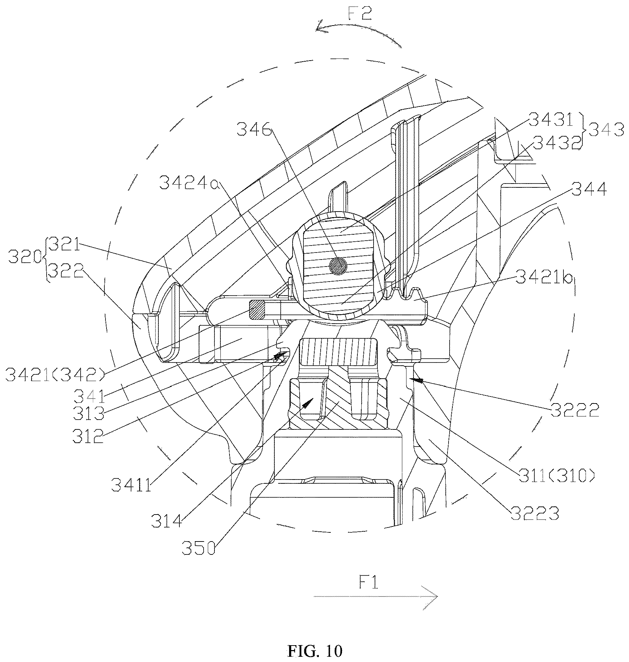

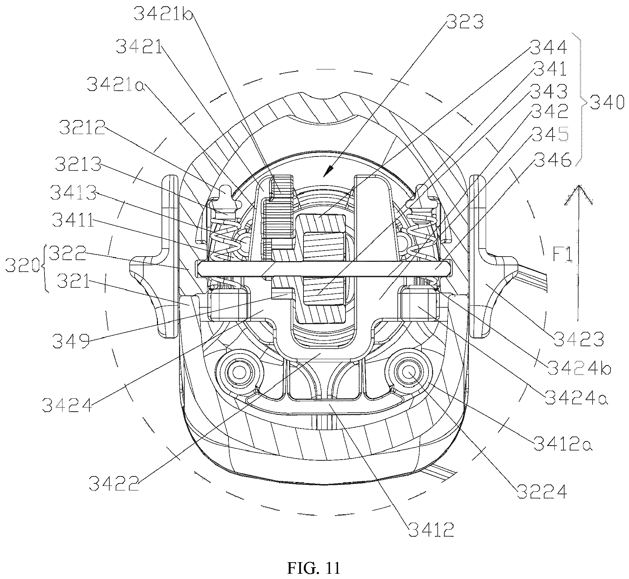

When it is necessary to remove the armrest body 200 from the frame 100, as shown in FIGS. 8 and 9, the unlocking member 342 can be moved from the first locked position to the first unlocked position by pushing the operating member 360 or the operating part 3423. That is, the unlocking member 342 moves in a direction F1 shown in FIGS. 8 and 9. In this case, the reset member 345 is compressed and deformed. During the movement of the unlocking member 342, the two pushing parts 3421 on the unlocking member 342 push against the two engaging arms 3411 on the engaging member 341 in a direction away from each other through the pushing inclined surfaces 3421a, so that the two engaging arms 3411 are elastically deformed and are disengaged from the engaging groove 312. Meanwhile, during the movement of the unlocking member 342, the sawtooth part 3421b is engaged with the gear part 349 to push against a moving member 348 and the second magnetic member 343 to rotate around the connecting shaft 346 in a direction F2 to the second rotation position, so that the second magnetic pole 3432 faces the first magnetic member 330, as shown in FIGS. 10 and 11. In this way, since the two engaging arms 3411 are disengaged from the engaging groove 312, and the second magnetic pole 3432 faces and repels the first magnetic member 330, the connecting base 320 can be quickly removed from the fixed base 310 without overcoming additional locked force, which is convenient and efficient. When the connecting base 320 has been removed from the fixed base 310, the pushing force on the operating member 360 or the operating part 3423 is removed, so that the unlocking member 342 can be reset from the first unlocked position to the first locked position under the elastic restoring force of the reset member 345. At the same time, the unlocking member 342 pushes the rotatable member 344 together with the second magnetic member 343 to rotate around the connecting shaft 346 in the direction F2 to the first rotational position through the engagement between the sawtooth part 3421b and the gear part 349, that is, the first magnetic pole 3431 is located below the second magnetic pole 3432.

When it is necessary to mount the armrest body 200 onto the frame 100, as shown in FIGS. 8 and 9, it is only necessary to press the connecting base 320 to the fixed base 310, so that the second coupling portion 3223 is sleeved outside the first coupling portion 311. The fixed base 310 is inserted into the receiving space 323 through the receiving hole 3222. At the same time, the two engaging arms 3411 of the engaging member 341 are elastically deformed to pass over the limiting boss 313 on the fixed base 310 and be engaged into the engaging groove 312. Since the first magnetic pole 3431 of the second magnetic member 343 is located below the second magnetic pole 3432, that is, the first magnetic pole 3431 can attract the first magnetic member 330, so that the connecting base 320 and the fixed base 310 can be automatically positioned quickly and accurately, and the engaging member 341 can be quickly engaged with the fixed base 310 without excessive manual correction, thus making the process of mounting the armrest body 200 on the frame 100 more convenient and efficient.

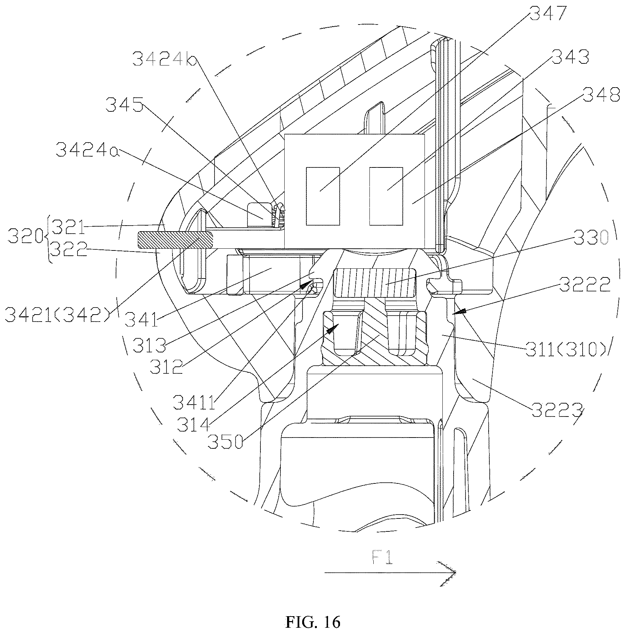

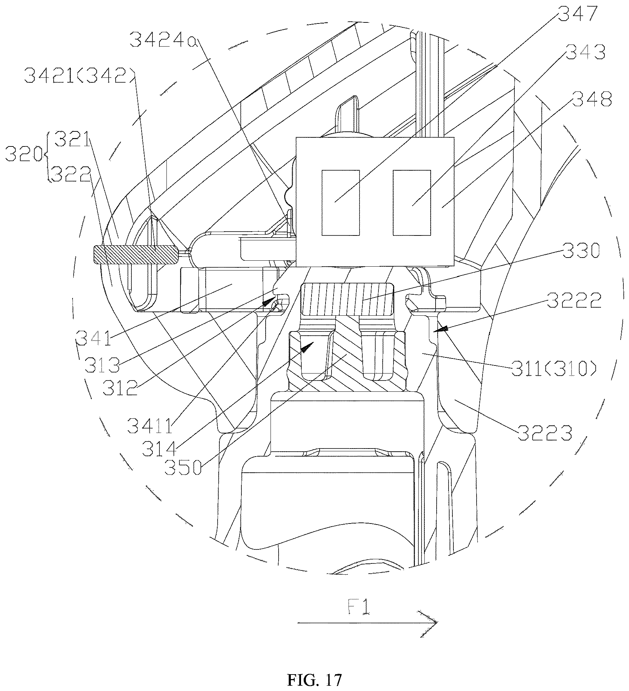

Optionally, in a second embodiment, as shown in FIGS. 16 and 17, the locking mechanism 340 may also include an engaging member 341, an unlocking member 342, a second magnetic member 343, a third magnetic member 347, a moving member 348, and a reset member 345.

In this embodiment, as shown in FIGS. 16 and 17, the configurations and arrangements of the engaging member 341, the unlocking member 342, and the reset member 345 are basically the same as those in the first embodiment, except that the pushing part 3421 of the engaging member 341 is not provided with the sawtooth part 3421b. The rotatable member 344 in which the second magnetic member 343 is embedded in the first embodiment is replaced with a moving member 348 in which the second magnetic member 343 and the third magnetic member 347 is embedded. The moving member 348 may be fixedly connected to the unlocking member 342, or the moving member 348 may be integrally formed with the unlocking member 342. In this embodiment, the moving member 348 is fixedly connected to ends of the two pushing parts 3421 away from the connecting part 3422. In other embodiments, the moving member 348 may also be fixedly connected to only one of the two pushing parts 3421. The second magnetic member 343 and the third magnetic member 347 are embedded in the moving member 348 at an interval, and a distance between the second magnetic member 343 and the third magnetic member 347 should ensure that the magnetic field of the second magnetic member 343 and the magnetic field of the third magnetic member 347 will not affect each other obviously. The moving member 348 has a first moving position and a second moving position.

Further, as shown in FIG. 16, when the unlocking member 342 is in the first locked position, the moving member 348 is in the first moving position, and the second magnetic member 343 can face and attract the first magnetic member 330. As shown in FIG. 17, when the unlocking member 342 is in the first unlocked position, the moving member 348 is in the second moving position, and the third magnetic member 347 can face and repel the first magnetic member 330. Specifically, the second magnetic member 343 is disposed at a side of the third magnetic member 347 in a direction indicated by the arrow of the direction F1. The second magnetic member 343 and the third magnetic member 347 are both permanent magnets. As mentioned above, in this embodiment, since the first magnetic member 330 is arranged with the S pole facing upward, an end of the second magnetic member 343 adjacent to the fixed base 310 (i.e., a lower end of the second magnetic member 343) is the N pole, and an end of the third magnetic member 347 adjacent to the fixed base 310 (i.e., a lower end of the third magnetic member 347) is the S pole. In this way, when the second magnetic member 343 faces the first magnetic member 330, the second magnetic member 343 and the first magnetic member 330 can attract each other. When the third magnetic member 347 faces the first magnetic member 330, the third magnetic member 347 and the first magnetic member 330 can repel each other. In other embodiments, if the first magnetic member 330 is arranged with the N pole facing upward, the end of the second magnetic member 343 adjacent to the fixed base 310 (i.e., the lower end of the second magnetic member 343) is the S pole, and the end of the third magnetic member 347 adjacent to the fixed base 310 (i.e., the lower end of the third magnetic member 347) is the N pole. In other embodiments, the second magnetic member 343 can also be replaced by an iron block or an object made of other ferromagnetic materials. In short, as long as the second magnetic member 343 and the first magnetic member 330 can attract each other when they face each other.

The specific working principle of the locking mechanism 340 in this embodiment is as follows.

When it is necessary to remove the armrest body 200 from the frame 100, as shown in FIG. 16, the unlocking member 342 can be moved from the first locked position to the first unlocked position by pushing the operating member 360 or the operating part 3423, that is, the unlocking member 342 moves in the direction F1 shown in FIG. 16. In this case, the reset member 345 is compressed and deformed. During the movement of the locking member 342, the two pushing parts 3421 on the unlocking member 342 push against the two abutting portions 3413 on the engaging member 341 in a direction away from each other through the pushing inclined surfaces 3421a, so that the two engaging arms 3411 are elastically deformed and are disengaged from the engaging groove 312. Meanwhile, during the movement of the unlocking member 342, the moving member 348 is also driven to overcome the attraction force of the second magnetic member 343 and the first magnetic member 330 and move to the second moving position. The third magnetic member 347 faces and repels the first magnetic member 330. In this way, since the two engaging arms 3411 are disengaged from the engaging groove 312, and the third magnetic member 347 faces and repels the first magnetic member 330, the connecting base 320 can be removed from the fixed base 310 quickly without overcoming additional locked force, which is convenient and efficient. When the connecting base 320 has been removed from the fixed base 310, the pushing force on the operating member 360 or the operating part 3423 is removed, and the unlocking member 342 can be reset from the first unlocked position to the first locked position under the elastic restoring force of the reset member 345. At the same time, the unlocking member 342 drives the moving member 348 to return to the first moving position in a direction opposite to the direction F1.

When it is necessary to mount the armrest body 200 onto the vehicle frame 100, it is only necessary to press the connecting base 320 to the fixed base 310, so that the second coupling portion 3223 is sleeved outside the first coupling portion 311, and the fixed base 310 is inserted into the receiving space 323 through the receiving hole 3222. At the same time, the two engaging arms 3411 of the engaging member 341 are elastically deformed to pass over the limiting boss 313 on the fixed base 310 and be engaged into the engaging groove 312. In this case, since the second magnetic member 343 faces and attracts the first magnetic member 330, the connecting base 320 and the fixed base 310 can be automatically positioned quickly and accurately, and the engaging member 341 can be quickly engaged with the fixed base 310 without excessive manual correction, thus making the process of mounting the armrest body 200 on the vehicle frame 100 more convenient and efficient.

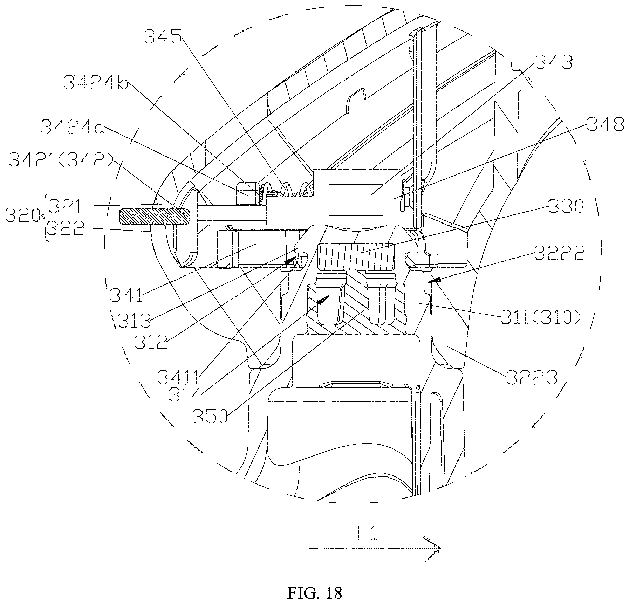

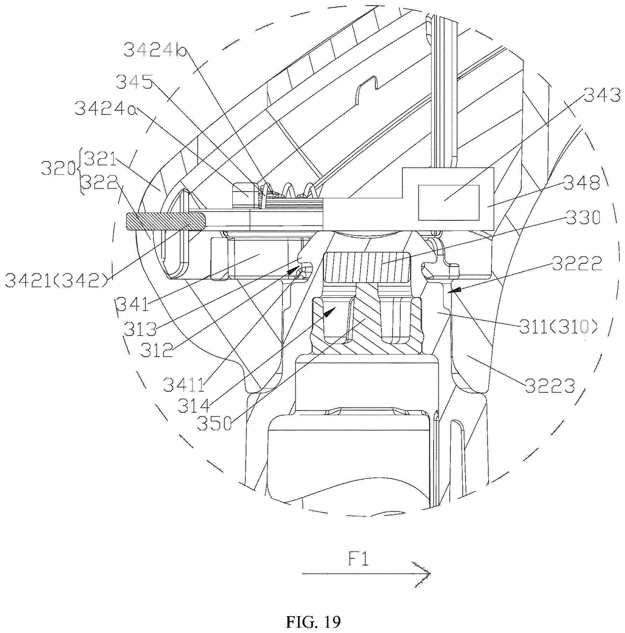

Optionally, in the third embodiment, as shown in FIGS. 18 and 19, the locking mechanism 340 may also include an engaging member 341, an unlocking member 342, a second magnetic member 343, a moving member 348, and a reset member 345.

As shown in FIGS. 18 and 19, the configurations and arrangements of the engaging member341, the unlocking member 342, the second magnetic member 343, the moving member 348, and the reset member 345 in this embodiment are basically the same as those in the second embodiment, only except that that the third magnetic member 347 is not provided in this embodiment. In this way, when the unlocking member 342 is in the first locked position, the moving member 348 is in the first moving position, and the second magnetic member 343 can face and forms a magnetic action with the first magnetic member 330. When the unlocking member 342 is in the first unlocked position, the moving member 348 is in the second moving position, and the second magnetic member 343 can be staggered from the first magnetic member 330 to remove the magnetic action.

The specific working principle of the locking mechanism 340 in this embodiment is the same as that in the second embodiment, and which will not be repeated again herein.

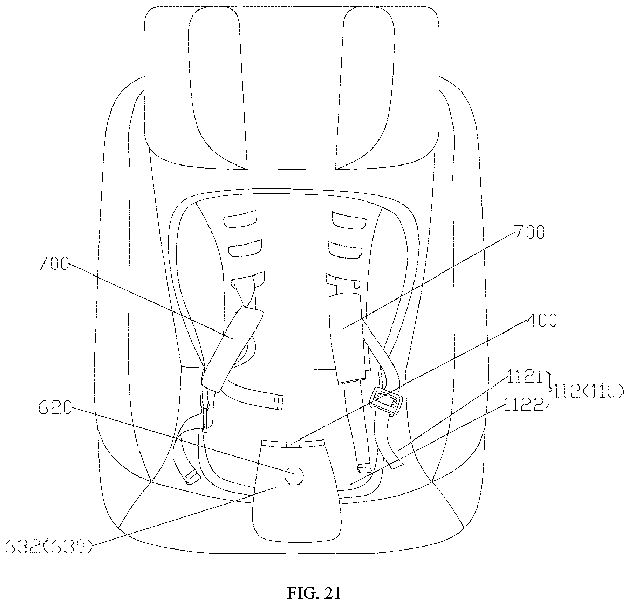

In another embodiment of the present application, as shown in FIGS. 20 and 21, the seat assembly 110 includes a seat part 112, a restraint belt 400, a locking buckle assembly 500, and a positioning mechanism 600. It should be noted that the seat assembly 110 can be disposed on the base of a handcart or a vehicle safety seat. In this embodiment, the seat assembly 110 disposed in the vehicle safety seat is taken as an example to illustrate the details of the restraint belt 400, the locking buckle assembly 500, and the positioning mechanism 600.

The restraint belt 400 is disposed on the seat assembly 110 and has a restraining position and a non-restraining position. In this embodiment, the restraint belt 400 includes a crotch belt. The crotch belt is disposed on the seat part 112 and correspondingly adapted to be disposed between two thighs of the occupant. An end of the restraint belt 400 is fixed on the seat part 112, and another end can be connected to one of locking buckles of the locking buckle assembly 500. As shown in FIG. 20, when the restraint belt 400 is in the restraining position, the restraint belt 400 can be used to restrict the occupant to the seat assembly 110. As shown in FIG. 21, when the restraint belt 400 is in the non-restraining position, it can facilitate the occupant to sit on and leave the seat assembly 110. In other embodiments, the restraint belt 400 may also include other belt-like structures disposed on the handcart for restricting the movement of the occupant.

The locking buckle assembly 500 includes a locking buckle configure to connect the restraint belt 400 to another pair of waist belts 700 for restraining the waist of the occupant. For example, such locking buckle may be a five-way buckle. The positioning mechanism 600 is disposed between the restraint belt 400 and the seat part 112. When the locking buckle assembly 500 is in a locked state, the locking buckle assembly 500 can keep the restraint belt 400 in the restraining position. When the locking buckle assembly 500 is in an unlocked state, the positioning mechanism 600 can keep the restraint belt 400 in the non-restraining position.

Optionally, the positioning mechanism 600 may have different forms. For example, in an embodiment, as shown in FIGS. 20 and 21, the positioning mechanism 600 includes a protective piece 630 sleeved outside the restraint belt 400, and a fourth magnetic member 610 disposed on the seat part 112, and the fifth magnetic member 620 disposed on the restraint belt 400 or the protective piece 630. An end of the restraint belt 400 can extend out of the protective piece 630 to be connected to one of the locking buckles of the locking buckle assembly 500. The fourth magnetic member 610 and the fifth magnetic member 620 can attract each other to keep the restraint belt 400 in the non-restraining position. Specifically, the fourth magnetic member 610 is fixed on the seat part 112 of the seat assembly 110 by, for example, machine sewing. In this embodiment, the seat part 112 includes a seat cloth 1121 and a seat cushion 1122 laid on the seat cloth 1121. The fourth magnetic member 610 can be disposed on the seat cloth 1121 or on the seat cushion 1122.

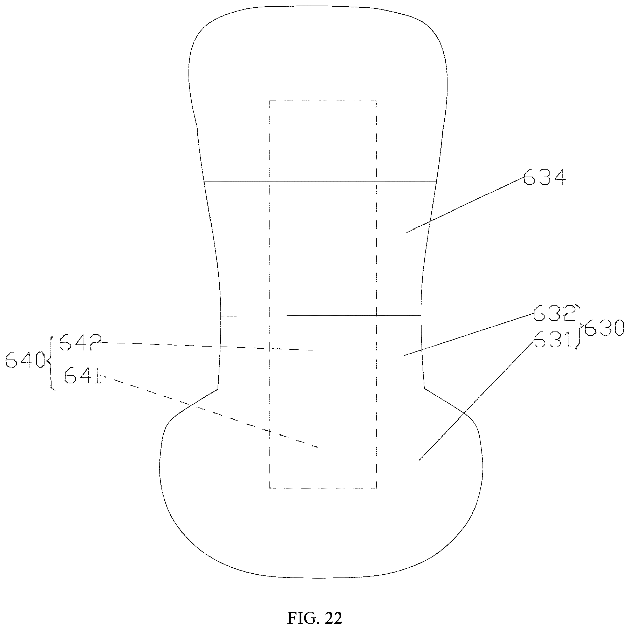

Specifically, a through hole 1122a may be disposed on the seat cushion 1122. Referring to FIG. 22, the protective piece 630 includes a first piece part 631 and a second piece part 632 that are connected to each other. The maximum width of the first piece part 631 is greater than the hole diameter of the through hole 1122a. An end of the second piece part 632 connected to the first piece part 631 has a width less than or equal to the hole diameter of the through hole 1122a. The protective piece 630 extends through the through hole 1122a. An end of the first piece part 631 away from the second piece part 632 can extends through the through hole 1122a and be located between the seat cloth 1121 and the seat cushion 1122 (that is, located below the seat cushion 1122). An end of the second piece part 632 away from the first piece part 631 extends through the seat cushion 1122 via the through hole 1122a and is located on a side of the seat cushion 1122 away from the seat cloth 1121, that is, located above the seat cushion 1122. The side of the seat cushion 1122 facing the seat cloth 1121 is called a first side, and the side of the seat cushion 1122 facing away from the seat cloth 1121 is called a second side. Then, the first piece part 631 is located on the first side of the seat cushion 1122, and the second piece part 632 is located on the second side of the seat cushion 1122. In this embodiment, a sleeve 634 is disposed at approximately the middle of the second piece portion 632. The restraint belt 400 is inserted into the second piece portion 632 and the sleeve 634. Specifically, the sleeve 634 is generally a square piece of cloth, and the opposite sides of the square piece of cloth are fixed to the second piece part 632 by sewing (such as machine sewing).

In this way, as shown in FIGS. 20 and 21, when the locking buckle assembly 500 is switched from the locked state to the unlocked state, the restraint belt 400 is switched from the restraining position to the non-restraining position, and the fifth magnetic member 620 on the protective piece 630 can attract the fourth magnetic member 610 on the seat cloth 1121 or the seat cushion 1122, thereby keeping the restraint belt 400 in the non-restraining position, avoiding the shift of the protective piece 630 and the need to manually adjust the position of the restraint belt 400, which is convenient for a child to sit on. The fourth magnetic member 610 and the fifth magnetic member 620 may both be permanent magnets. The magnetic poles of the fourth magnetic member 610 and the fifth magnetic member 620 may be disposed so that the fourth magnetic member 610 and the fifth magnetic member 620 can attract each other when the restraint belt 400 is in the non-restraining position. Alternatively, one of the fourth magnetic member 610 and the fifth magnetic member 620 may be a permanent magnet, and the other one of the fourth magnetic member 610 and the fifth magnetic member 620 is an iron block or an object made of other ferromagnetic materials. It should be noted that in this embodiment, the fifth magnetic member 620 is disposed on the protective piece 630, but which is not limited in the present application. When the positioning mechanism 600 does not includes the protective piece 630, the fifth magnetic member 620 may also be disposed on the restraint belt 400.

Further, as shown in FIG. 22, the positioning mechanism 600 may further include a flexible resilient member 640 disposed in the protective piece 630. Alternatively, the flexible resilient member 640 may have a sheet-like structure made of a PVC material, a metal material, or other soft materials with certain flexibility. The flexible resilient member 640 extends from the first piece part 631 to the second piece part 632 to ensure the resilience of the flexible resilient member 640. Specifically, the flexible resilient member 640 may include a first elastic part 641 and a second elastic part 642 connected to each other. The first elastic part 641 is located in the first piece part 631, and the second elastic part 642 is located in the second piece part 632. That is, when the protective piece 630 is disposed to extend through the through hole 1122a on the seat cushion 1122, the first elastic part 641 of the flexible resilient member 640 extends through the through hole 1122a and is located on the first side of the seat cushion 1122. (i.e., located below the seat cushion 1122), and the second elastic part 642 is located on the second side of the seat cushion 1122 (i.e., located above the seat cushion 1122). In this embodiment, the protective piece 630 is filled with a cushioning material, and the flexible resilient member 640 is located between the cushioning material and the restraint belt 400. In this way, the flexible resilient member 640 can be prevented from contacting the child, thereby improving the child's safety comfort.

In this way, when the locking buckle assembly 500 is in the locked state and the restraint belt 400 is in the restraining position, the flexible resilient member 640 in the protective piece 630 can be bent and deformed. When the locking buckle assembly 500 is in the unlocked state, the flexible resilient member 640 can automatically return to a normally straightened state under its own elastic restoring force, thereby driving the restraint belt 400 to automatically switch to the non-restraining position. In other words, the flexible resilient member 640 always moves the restraint belt 400 toward the non-restraining position.

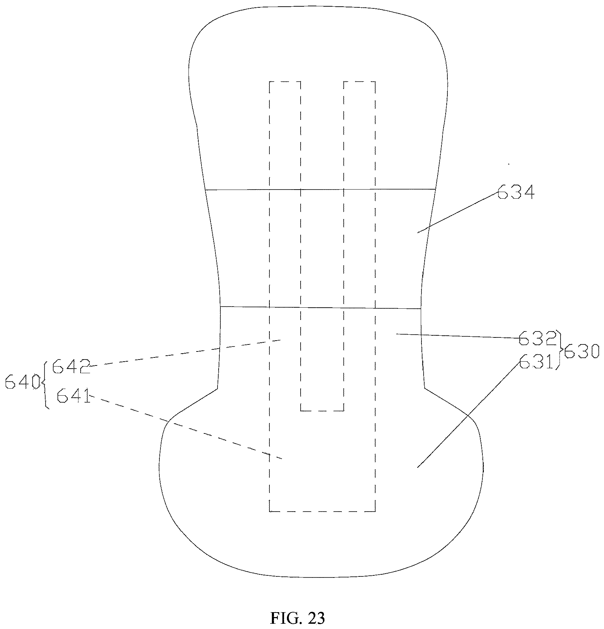

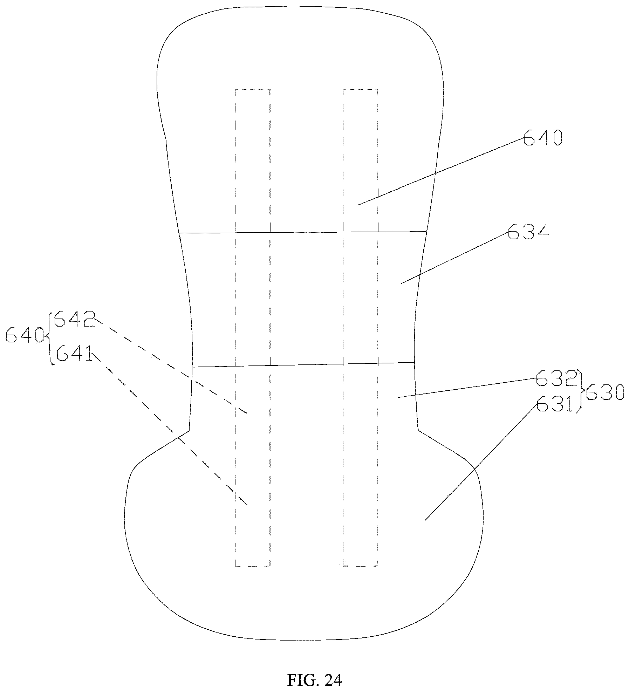

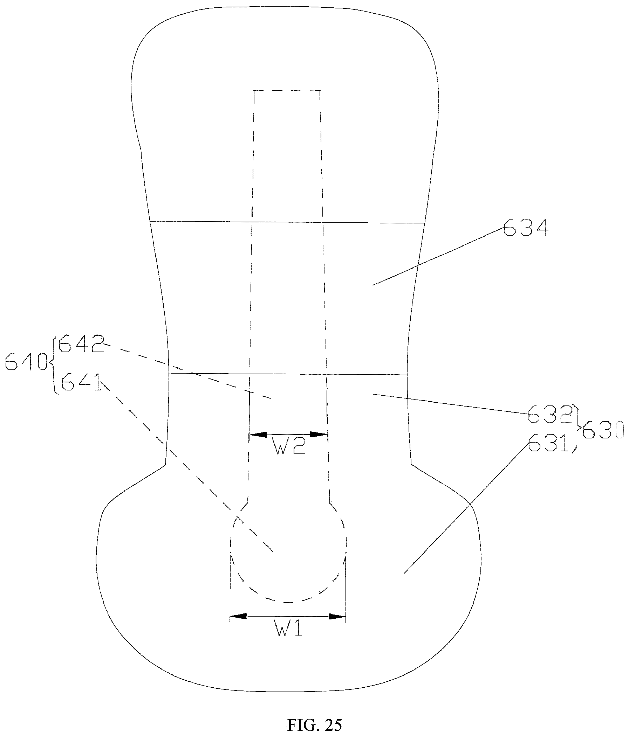

Optionally, the flexible resilient member 640 can have a variety of shapes, such as a single strip shape (as shown in FIG. 22), a U-shape (as shown in FIG. 23), or two opposite strips shape (as shown in FIG. 24), etc. As shown in FIG. 25, the flexible resilient member 640 may also include a circular first elastic part 641 and a strip-shaped second elastic part 642. The maximum width W2 of the second elastic part 642 is smaller than the maximum width W1 of the first elastic part 641. Such an arrangement can ensure that the flexible resilient member 640 has greater elastic resilience.

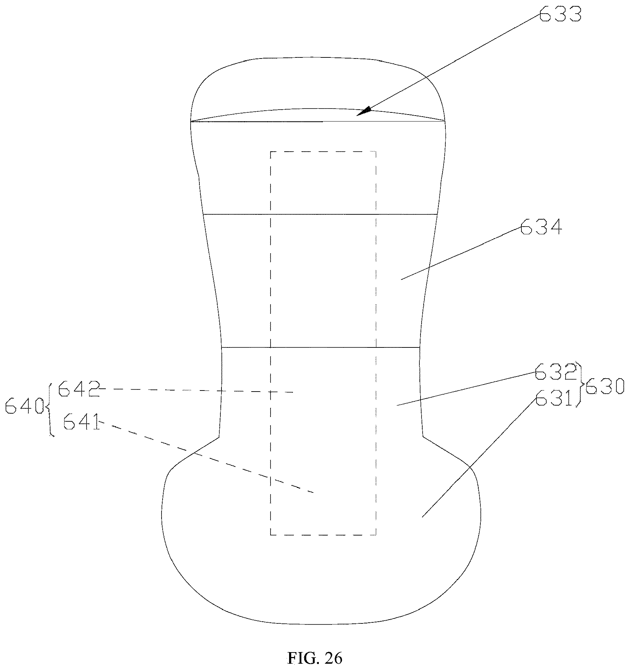

Further, as shown in FIG. 26, an opening 633 can be disposed on the protective piece 630, and the flexible resilient member 640 can be removed from the protective piece 630 through the opening 633 to facilitate cleaning of the protective piece 630. Alternatively, a pocket can be sewn inside the protective piece 630, and the flexible resilient member 640 can be removably inserted into the pocket. When the protective piece 630 needs to be cleaned, the flexible resilient member 640 can also be taken out of the pocket.

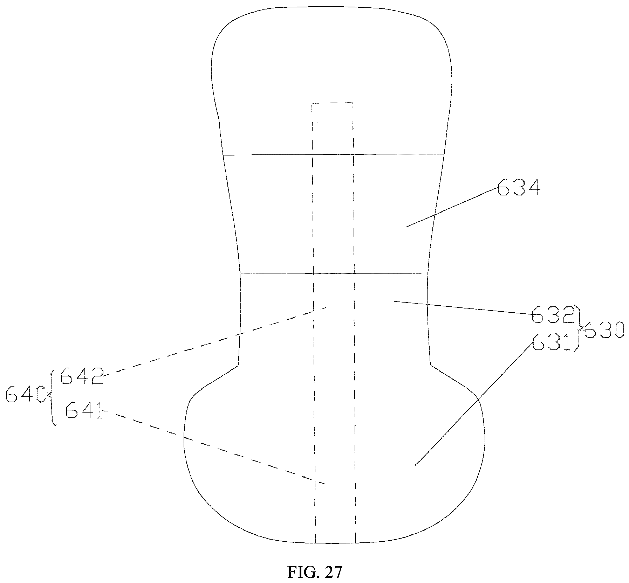

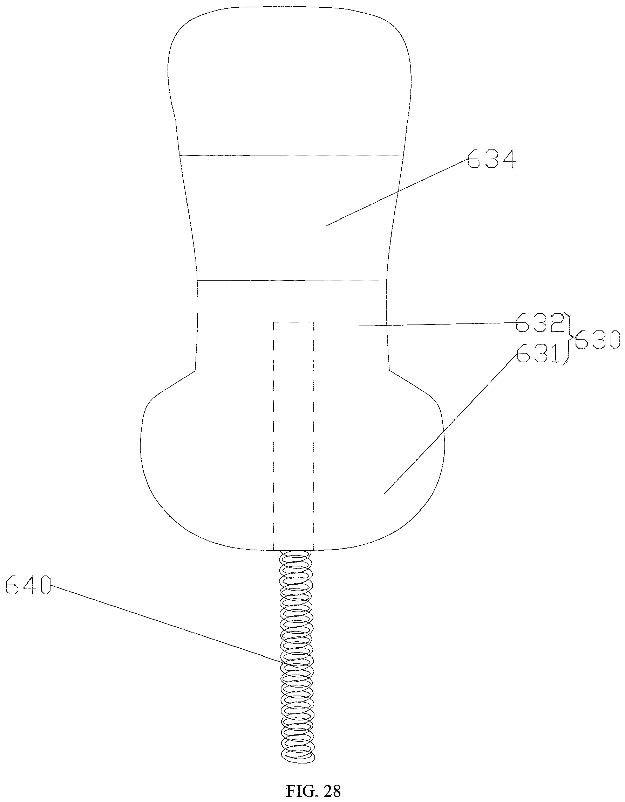

In some embodiments, as shown in FIGS. 27 and 28, the flexible resilient member 640 can also be a spring, such as a fishbone spring. The fishbone spring has a hollow structure in the middle and has a strong resilience. When the locking mechanism 340 is unlocked, it is easier to drive the protective piece 630 together with the restraint belt 400 to pop up quickly. In this embodiment, the fishbone spring is fixed in the protective piece 630 by sewing, such as machine sewing, and the protective piece 630 can be filled with a cushioning material to prevent the fish bone spring from contacting the child and improve the comfort of use. Alternatively, the cushioning material may be a foam with a foaming rate of 20 times, and may be made of common materials such as EPS. The fishbone spring in this embodiment also extends from the first piece part 631 to the second piece part 632 to ensure its own resilience. In this embodiment, the fishbone spring is generally disposed along a longitudinal center axis of the protective piece 630. In other embodiments, the fishbone spring can also be disposed on the left or right side of the longitudinal center axis of the protective piece 630, or two fishbone springs are arranged at an interval. Specifically, a strip pocket can also be sewn at inner side of the protective piece at the longitudinal central axis to accommodate the fishbone spring.

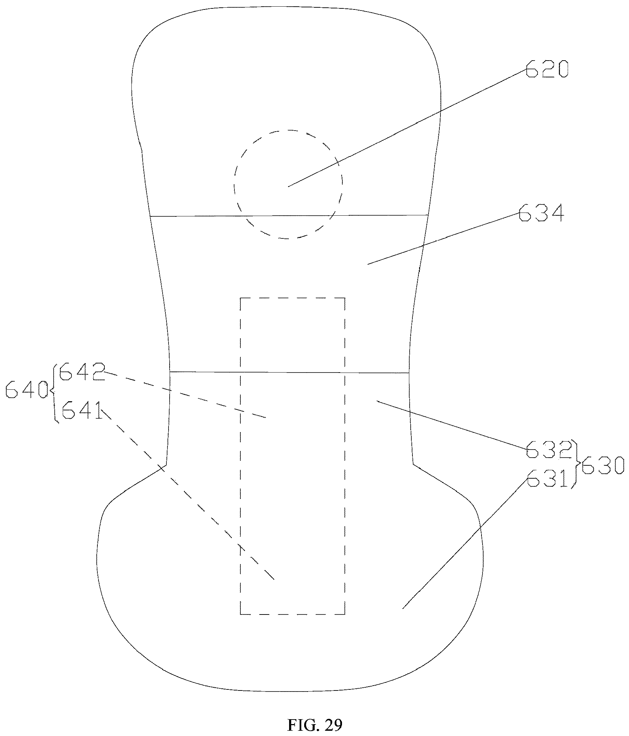

In some embodiments, as shown in FIG. 29, if the positioning mechanism 600 includes the fourth magnetic member 610, the fifth magnetic member 620, and the flexible resilient component 640, when the locking buckle assembly 500 is switched from the locked state to the unlocked state, the restraint belt 400 can be automatically switched from the restraining position to the non-restraining position under the elastic restoring force of the flexible resilient member 640, and then, the protective piece 630 and the seat part 112 are quickly fixed to each other through the attracting effect between the fourth magnetic member 610 and the fifth magnetic member 620, and the restraint belt 400 is kept in the non-restraining position. In this embodiment, the fifth magnetic member 620 and the flexible resilient member 640 may be spaced apart on the protective piece 630. In this way, due to the auxiliary positioning function of the fifth magnetic member 620, the length of the flexible resilient component 640 can be appropriately shortened to save material. In another embodiment, the fifth magnetic member 620 may also be disposed on the sleeve 634.

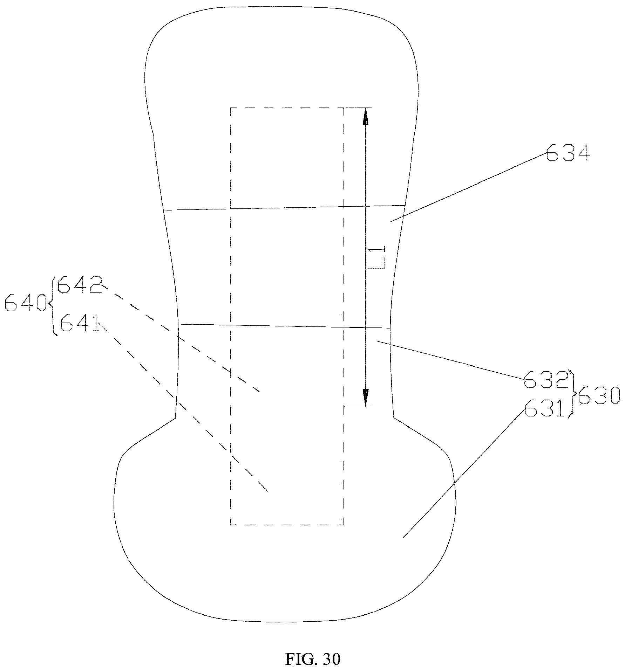

In some embodiments, as shown in FIG. 30, if the flexible resilient member 640 is made of a ferromagnetic metal material, the flexible resilient member 640 and the fourth magnetic member 610 can attract each other, so that the fifth magnetic member 620 can be omitted, and the fourth magnetic member 610 are only disposed on the seat part 112. In such an embodiment, it should ensure that the length L1 (refer to FIG. 30) of the second elastic part 642 of the flexible resilient member 640 is greater than the shortest length L2 (refer to FIG. 20) from the through hole 1122a to the fourth magnetic member 610, so that when the restraint belt 400 is in the non-restraining position, the flexible resilient member 640 can at least partially face and attract the fourth magnetic member 610.

In other embodiments, the protective piece 630 itself can also be made of a flexible rubber material. In this case, there is no need to provide the flexible resilient member 640 in the protective piece 630, and the protective piece 630 can drive the restraint belt 400 to automatically reset. It should be noted that in some embodiments, the positioning mechanism 600 may only include the protective piece 630 and the flexible resilient member 640 disposed in the protective piece 630, but does not include the fourth magnetic member 610 and the fifth magnetic member 620.

The armrest mounting unit 300 and the handcart provided by the present application have at least the following technical effects.

In the above-mentioned armrest mounting unit 300, the magnetic force formed between the first magnetic member 330 and the locking mechanism 340 includes attractive force and/or repulsive force, so that the locking mechanism 340 can be switched between the locked state where the fixed base 310 is fixed onto the connecting base 320 and the unlocked state where the fixed base 310 is separated from the connecting base 320. When the fixed base 310 and the connecting base 320 are respectively mounted on, for example, the armrest body 200 and the frame 100, the armrest body 200 can be quickly mounted on and removed from the frame 100, which is convenient to use.

The technical features of the embodiments above may be combined arbitrarily. To make the description concise, not all possible combinations of the technical features in the above embodiments are described. However, as long as there are no contradictions in the combinations of these technical features, all of the combinations should be considered to be within the scope of the specification.

The embodiments above only represent several implementation modes of the present application, and the description thereof is relatively specific and detailed, but it should not be construed as limiting the scope of the patent. It should be noted that for those skilled in the art, various modifications and improvements may be made without departing from the concept of the present application, and all these modifications and improvements fall within the protection scope of the present application. Therefore, the scope of protection of the present application shall be subject to the appended claims.

## Claims

1. An armrest mounting unit (300), comprising:
a fixed base (310);
a connecting base (320);
a first magnetic member (330) fixed on one of the fixed base (310) and the connecting base (320); and
a locking mechanism (340) disposed on the other one of the fixed base (310) and the connecting base (320),
wherein when the locking mechanism (340) is in a locked state, the connecting base (320) is fixable on the fixed base (310) through the locking mechanism (340), and when the locking mechanism (340) is in an unlocked state, the connecting base (320) is separable from the fixed base (310), and
wherein the first magnetic member (330) forms a magnetic action with the locking mechanism (340), to assist positioning and separation of the fixed base (310) and the connecting base (320).

2. The armrest mounting unit (300) according to claim 1, wherein the locking mechanism (340) is disposed on the connecting base (320), and comprises:
an unlocking member (342) operable to move between a first locked position and a first unlocked position;
an engaging member (341) disposed on the connecting base (320); and
a second magnetic member (343) movably disposed on the connecting base (320), and forming a magnetic action with the first magnetic member (330),
optionally, wherein the locking mechanism (340) further comprises:
a rotatable member (344) rotatably disposed at the connecting base (320), and having a first rotation position and a second rotation position,
wherein the second magnetic member (343) is disposed on the rotatable member (344); the second magnetic member (343) comprises two ends serving as a first magnetic pole (3431) and a second magnetic pole (3432) respectively; when the rotatable member (344) is in the first rotation position, the first magnetic pole (3431) and the first magnetic member (330) face and attract each other; and when the rotatable member (344) is in the second rotation position, the second magnetic pole (3432) and the first magnetic member (330) face and repel each other; and wherein when the unlocking member (342) is in the first locked position, the unlocking member (342) drives the rotatable member (344) to rotate to the first rotation position; and when the unlocking member (342) is in the first unlocked position, the unlocking member (342) drives the rotatable member (344) to rotate to the second rotation position,
more optionally, wherein the locking mechanism (340) further comprises:
a connecting shaft (346) fixed to the connecting base (320);
wherein the rotatable member (344) is sleeved on the connecting shaft (346) and is rotable around the connecting shaft (346).

3. The armrest mounting unit (300) according to claim 2, wherein the unlocking member (342) is provided with a sawtooth part (3421b), and the rotatable member (344) is provided with a gear part (349) engageable with the unlocking member (342);
wherein the unlocking member (342) drives the rotatable member (344) to rotate through a cooperation of the sawtooth part (3421b) and the gear part (349);
and/or, wherein the unlocking member (342) is movable between the first locked position and the first unlocked position; the sawtooth part (3421b) is disposed in a moving direction of the unlocking member (342); the gear part (349) protrudes from a side surface of the rotatable member (344); and the sawtooth part (3421b) is engaged with the gear part (349).

4. The armrest mounting unit (300) according to claim 2 or 3, wherein: the second magnetic member (343) is fixedly connected to the unlocking member (342); when the unlocking member (342) is in the first locked position, the second magnetic member (347) faces and forms a magnetic action with the first magnetic member (330); and when the unlocking member (342) is in the first unlocked position, the second magnetic member (347) is staggered from the first magnetic member (330) to remove the magnetic action,
optionally, wherein the second magnetic member (343) is a permanent magnet; or the second magnetic member (343) is made of a ferromagnetic material.

5. The armrest mounting unit (300) according to any one of claims 2 to 4, wherein the locking mechanism (340) further comprises a third magnetic member (347); and the second magnetic member (343) and the third magnetic member (347) are spaced apart from each other, and are fixedly connected to the unlocking member (342); and wherein when the unlocking member (342) is in the first locked position, the second magnetic member (347) faces and attracts the first magnetic member (330); and when the unlocking member (342) is in the first unlocked position, the third magnetic member (347) faces and repels the first magnetic member (330),
optionally, wherein: the locking mechanism (340) further comprises a moving member (348); the second magnetic member (343) and the third magnetic member (347) are spaced apart on the moving member (348); and the moving member (348) is fixed to the unlocking member (342).

6. The armrest mounting unit (300) according to any one of claims 2 to 5, wherein: the engaging member (341) comprises an abutting portion (3413); the unlocking member (342) comprises a pushing part (3421); during a movement of the unlocking member (342) from the first locked position to the first unlocked position, the pushing part (3421) pushes against the abutting portion (3413) so that the engaging member (341) is disengaged from the fixed base (310),
and/or, wherein: the engaging member (341) comprises an engaging arm (3411); the fixed base (310) comprises an engaging groove (312); when the unlocking member (342) is in the first locked position, the engaging arm (3411) is engaged with the engaging groove (312); and when the unlocking member (342) is in the first unlocked position, the engaging arm (3411) is disengaged from the engaging groove (312).

7. The armrest mounting unit (300) according to any one of claims 2 to 6, wherein: the engaging member (341) comprises an abutting portion (3413); the unlocking member (342) comprises a pushing part (3421); during a movement of the unlocking member (342) from the first locked position to the first unlocked position, the pushing part (3421) pushes against the abutting portion (3413) so that the engaging member (341) is elastically deformed to be disengaged from the fixed base (310);
optionally, wherein: the engaging member (341) comprises an engaging arm (3411); the abutting portion (3413) is disposed at the engaging arm (3411); the fixed base (310) comprises an engaging groove (312); the pushing part (3421) comprises a pushing inclined surface (3421a), and during the movement of the unlocking member (342) from the first locked position to the first unlocked position, the pushing inclined surface (3421a) pushes against the abutting portion (3413), so that the engaging arm (3411) is elastically deformed in a direction away from the engaging groove (312);
more optionally, wherein the engaging member (341) further comprises a fixing part (3412) connected to the engaging arm (3411); and wherein the fixing part (3412) is fixed to the connecting base (320).

8. The armrest mounting unit (300) according to any one of claims 2 to 7, wherein the locking mechanism (340) further comprises an operating member (360); the unlocking member (342) comprises an operating part (3423); the operating member (360) is connected to or abuts against the operating part (3423); and the operating member (360) is operable to drive the unlocking member (342) to move between the first locked position and the first unlocked position through the operating part (3423),
optionally, wherein the engaging member (341) comprises two engaging arms (3411) facing each other and a fixing part (3412) connected between the two engaging arms (3411); wherein the fixing part (3412) is fixed on the connecting base (320); the fixed base (310) comprises an annular engaging groove (312); the fixed base (310) is located between the two engaging arms (3411); each of the two engaging arms (3411) is provided with an abutting portion (3413); the unlocking member (342) is provided with two pushing parts (3421) facing each other; and wherein when the unlocking member (342) is in the first locked position, the two engaging arms (3411) are engaged with the engaging groove (312); during a movement of the unlocking member (342) from the first locked position to the first unlocked position, the two pushing parts (3421) push against two abutting portions (3413) respectively so that the two engaging arms (3411) are elastically deformed in a direction away from each other to be disengaged from the engaging groove (312),
more optionally, wherein one or two operating part (3423) are provided; and the one or two operating part (3423) are respectively connected to the two pushing parts (3421); and wherein the one or two operating part (3423) are operable to drive the two pushing parts (3421) to move.

9. The armrest mounting unit (300) according to any one of claims 2 to 8, wherein the locking mechanism (340) further comprises a reset member (345) disposed between the unlocking member (342) and the connecting base (320); and the reset member (345) is adapted to bias the unlocking member (342) to move toward the first locked position,
and/or, wherein: the connecting base (320) comprises a first cover (321) and a second cover (322); and wherein the first cover (321) and the second cover (322) enclose a receiving space (323); and the engaging member (341), the second magnetic member (343), and at least part of the unlocking member (342) is disposed in the receiving space (323),
and/or, wherein the unlocking member (342) comprises an operating part (3423); and wherein the operating part (3423) is operable so that the unlocking member (342) moves between the first locked position and the first unlocked position.

10. The armrest mounting unit (300) according to any one of claims 1 to 9, wherein: the fixed base (310) comprises a first coupling portion (311); the connecting base (320) comprises a second coupling portion (3223); and when the connecting base (320) is engaged with and locked with the fixed base (310), the second coupling portion (3223) is sleeved outside the first coupling portion (311).

11. A handcart, comprising:
a frame (100);
an armrest body (200); and
an armrest mounting unit (300) according to any one of claims 1 to 10,
wherein the fixed base (310) is disposed on one of the frame (100) and armrest body (200);
the connecting base (320) is disposed on the other one of the frame (100) and armrest body (200); and the armrest body (200) is detachably mounted on the frame (100) through the armrest mounting unit (300).

12. The handcart according to claim 11, wherein the frame (100) comprises a seat assembly (110), the handcart further comprises:
a restraint belt (400) disposed on the seat assembly (110) and having a restraining position and a non-restraining position;
a locking buckle assembly (500) connected to the restraint belt (400) and having a locked state and an unlocked state; and
a positioning mechanism (600) disposed between the restraint belt (400) and the seat assembly (110);
wherein when the locking buckle assembly (500) is in the locked state, the locking buckle assembly (500) is connectable to the restraint belt (400) to keep the restraint belt (400) in the restraining position, and when the locking buckle assembly (500) is in an unlocked state, the positioning mechanism (600) keeps the restraint belt (400) in the non-restraining position.

13. The handcart according to claim 12, wherein the positioning mechanism (600) comprises a fourth magnetic member (610) disposed on the seat assembly (110), and
wherein the the positioning mechanism (600) further comprises a fifth magnetic member (620) disposed on the restraint belt (400); and wherein the fourth magnetic member (610) and the fifth magnetic member (620) are capable of attracting each other to keep the restraint belt (400) in the non-restraining position,
and/or, wherein the positioning mechanism (600) further comprises a protective piece (630) sleeved outside the restraint belt (400) and a fifth magnetic member (620) disposed on the protective piece (630); and wherein an end of the restraint belt (400) is capable of extending out of the protective piece (630).

14. The handcart according to claim 12 or 13, wherein the positioning mechanism (600) comprises a protective piece (630) sleeved outside the restraint belt (400) and a flexible resilient member (640) disposed in the protective piece (630); and wherein the flexible resilient member (640) always moves the restraint belt (400) toward the non-restraining position;
optionally, wherein the seat assembly (110) comprises a seat part (112) configured to carry an occupant; and wherein the seat part (112) comprises a first side facing away from the occupant and a second side facing the occupant; the seat part (112) is provided with a through hole (1122a); the protective piece (630) comprises a first piece part (631) and a second piece part (632) that are connected to each other; a maximum width of the first piece part (631) is greater than a hole diameter of the through hole (1122a); an end of the second piece part (632) connected to the first piece part (631) has a width less than or equal to the hole diameter of the through hole (1122a); the protective piece (630) extends through the through hole (1122a); the first piece part (631) is located on the first side of the seat part (112), and the second piece part (632) is located on the second side of the seat part (112),
more optionally, wherein the flexible resilient member (640) extends from the first piece part (631) to the second piece part (632,
even more optionally, wherein the flexible resilient member (640) comprises a first elastic part (641) and a second elastic part (642) connected to each other; and wherein the first elastic part (641) is located in the first piece part (631), the second elastic part (642) is located in the second piece part (632), and a maximum width of the first elastic part (641) is greater than a maximum width of the second elastic part (642).

15. The handcart according to claim 14, wherein the positioning mechanism (600) further comprises a fourth magnetic member (610) disposed on the seat assembly (110) and a fifth magnetic member (620) disposed on the protective piece (630); and wherein the fourth magnetic member (610) and the fifth magnetic member (620) are capable of attracting each other to keep the restraint belt (400) in the non-restraining position,
and/or, wherein the positioning mechanism (600) further comprises a fourth magnetic member (610) disposed on the seat assembly (110); the flexible resilient member (640) is made of a ferromagnetic material; and the flexible resilient member (640) always moves the restraint belt (400) toward the non-restraining position; and wherein the fourth magnetic member (610) and the flexible resilient member (640) are capable of attracting each other to keep the restraint belt (400) in the non-restraining position,
and/or, wherein the protective piece (630) comprises an opening (633), the flexible resilient member (640) is removable from the protective piece (630) through the opening (633);
or, wherein a pocket is disposed on the protective piece (630), and the flexible resilient member (640) is removably inserted into the pocket,
and/or, wherein the protective piece (630) is filled with a cushioning material; and wherein the flexible resilient member (640) is located between the cushioning material and the restraint belt (400).
